# EUROPÄISCHE PATENTSCHRIFT

(11) **EP 3 131 774 B1**
(45) Veröffentlichungstag und Bekanntmachung des Hinweises auf die Patenterteilung: **17.07.2019**
(21) Anmeldenummer: 15712577.4
(22) Anmeldetag: 19.03.2015
(51) Int. Cl.: B60H 1/34

(54) **EINRICHTUNG ZUM VERSTELLEN VON LAMELLEN EINES LUFTAUSSTROEMERS**
DEVICE FOR ADJUSTING SLATS OF AN AIR OUTLET
DISPOSITIF DE RÉGLAGE DE LAMES PIVOTANTES D'UN AÉRATEUR

(30) Priorität: 14.04.2014 DE 102014105273
(43) Veröffentlichungstag der Anmeldung: 22.02.2017
(60) Teilanmeldung: 16198255.8
(73) Patentinhaber: Dr. Schneider Kunststoffwerke GmbH, 96317 Kronach-Neuses (DE)
(72) Erfinder: GRUENBECK, Thomas, 96358 Teuschnitz (DE); EBERTSCH, Reinhard, 96349 Steinwiesen (DE); SCHNEIDER, Falk, 02708 Dürrhennersdorf (DE); WUTTKE, Christian, 02829 Markersdorf (DE)
(86) Internationale Anmeldenummer: PCT/EP2015/055776
(87) Internationale Veröffentlichungsnummer: WO 2015/158486

(56) Entgegenhaltungen:
- EP-A2- 0 257 500
- DE-A1- 4 327 265
- DE-A1- 19 943 822
- DE-B3-102005 037 748
- FR-A1- 2 844 484
- FR-A1- 2 861 652
- JP-A- H0 952 519
- JP-A- H01 142 359
- JP-A- H10 232 047
- JP-A- 2005 003 289
- JP-A- 2007 152 974
- JP-U- H01 125 959
- JP-U- S57 188 038
- US-A- 5 738 580
- US-A1- 2004 142 653
- US-A1- 2006 172 680

## Beschreibung

Die vorliegende Erfindung betrifft eine Einrichtung zum Verstellen von im Wesentlichen senkrecht zueinander angeordneten Lamellen eines Luftausströmers. Luftausströmer, wie sie beispielsweise in Kraftfahrzeugen eingesetzt werden, weisen in der Regel senkrecht zueinander angeordnete Lamellen auf, die entweder manuell oder mit Hilfe von elektrischen Antrieben verschwenkt werden können.

Luftausströmer, bei welchen die Lamellen manuell verstellt werden können, weisen in der Regel eine Mechanik auf, die es erlaubt, über die Betätigung von Bedienelementen sowohl horizontal als auch vertikal verlaufene Lamellen zu verschwenken. Luftausströmer, die elektrisch angetrieben ihre Lamellen verschwenken können, weisen in der Regel mindestens zwei Stellmotoren auf, wobei ein Motor das Verstellen von beispielsweise horizontal verlaufenden Lamellen und ein Motor das Verstellen von vertikal verlaufenden Lamellen bewirkt.

Die elektrischen Stellmotoren können hierbei über Druckknöpfe oder sensorische Einrichtungen gesteuert werden. Es sind be rührungsempfindliche Bedieneinheiten bekannt, wobei durch Berühren beispielsweise eines Displays Einstellungen vorgenommen und verändert werden können.

Sowohl beim manuellen Verstellen über mechanische Komponenten als auch beim motorischen Verstellen über beispielsweise sogenannte Stellmotoren weisen die Einrichtungen zum Verstellen der Lamellen von Luftausströmern mehrere Komponenten auf, die die manuelle oder motorische Bewegung übertragen und übersetzen, um ein gewünschtes Verstellen der Lamellen zu bewirken.

DE 10 2007 035 507 A1 offenbart eine Kraftfahrzeug-Belüftungseinrichtung mit einem Luftausströmer, der einen Rahmen umfasst, mit horizontalen und/oder vertikalen Luftleitlamellen, die durch den Rahmen getragen werden, wobei der Rahmen und/oder die Luftleitlamellen verschwenkbar ausgeführt sind, mit zumindest einer Verschwenkeinrichtung zum Verschwenken des Rahmens und/oder der Luftleitlamellen, mit einer Sensoreinrichtung zur Erzeugung und Ausgabe eines Sensorsignals als Reaktion auf die Bewegung eines Nutzers in der Umgebung des Luftausströmers und mit einer Steuereinrichtung, die derart eingerichtet und derart mit der Verschwenkeinrichtung und der Sensoreinrichtung gekoppelt ist, dass der Rahmen und/oder die Luftleitlamellen durch die Verschwenkeinrichtung in Abhängigkeit von dem Sensorsignal verschwenkt werden. Wenn sowohl die horizontal verlaufenden Lamellen als auch die vertikal verlaufenden Lamellen verschwenkt werden sollen, sind ein Stellmotor für die horizontal verlaufenden Lamellen und ein Stellmotor für die vertikal verlaufenden Lamellen vorgesehen.

DE 102 31 580 A1 offenbart eine in die Armaturentafel eines Kraftfahrzeuges einbaubare Lüftungsdüse, mit einer Vielzahl, jeweils um eine horizontale Achse schwenkbarer, einen Lamellenvorhang bildenden Horizontallamellen, mit denen eine Ausströmöffnung eines Gehäuses zumindest teilweise verschließbar ist, und mit mindestens einer Vertikallamelle, die im Austrittsbereich eines in das Gehäuse mündenden Ausströmkanals angeordnet ist und mit der durch Verschwenken um eine vertikale Achse ein durch den Ausströmkanal geführter Luftstrom umlenkbar ist, welche so ausgebildet ist, dass die Horizontal- und die Vertikallamellen an einen Antrieb angeschlossen und bei dessen Betätigung in eine vorbestimmte Position verschwenkbar sind.

DE 199 56 259 A1 offenbart eine Fahrzeug-Klimaanlage mit einer Klimatisierungseinheit, wobei Temperatureinstellungen für Klimatisierungszonen auf rechten und linken Sitzseiten unabhängig voneinander durchgeführt werden können. Die in einer gemeinsamen Richtung verlaufenden Lamellen von zwei benachbarten Luftausströmern können gemeinsam von einem Servomotor angesteuert werden.

JP H09 52519 A offenbart einen Luftausströmer, der ein drehbares Verstellelement mit einer Führungsnut aufweist, wobei in der Führungsnut ein Verstellelement zum Verschwenken von ersten Lamellen geführt ist. Das Verstellelement ist über eine Koppelstange mit zweiten Lamellen gekoppelt, wobei die zweiten Lamellen verschwenkt werden, wenn das Verstellelement verdreht wird.

FR 2 861 652 A1 offenbart einen Luftausströmer mit einem verschiebbar auf einer drehbar gelagerten Welle angeordneten Verstellelement zum Verschwenken von Vertikallamellen. Horizontallamellen des Luftausströmers werden über ein Verdrehen eines Bedienrads verschwenkt, wobei das Bedienrad mit der Welle gekoppelt ist.

Nachteilig bei den aus dem Stand der Technik bekannten Einrichtungen zum Verstellen von Lamellen eines Luftausströmers sind die Vielzahl von zu verwendenden Komponenten und die erforderlichen Bedienbewegungen (longitudinales Verschieben und/oder Drehen), wobei dies sowohl bei einem mechanischen als auch bei einem elektrischen Verstellen erforderlich ist. Bei manuell verstellbaren Luftausströmern muss mindestens ein Bedienelement beispielsweise horizontal und vertikal verschwenkt werden, um entsprechend zugeordnete Lamellen zu verschwenken. Bei Luftausströmern mit Stellmotoren für die Lamellen sind mindestens zwei Stellmotoren vorgesehen. Die Stellmotoren führen voneinander unabhängige Drehbewegungen aus. Darüber hinaus ist bei den vorstehend genannten Ausführungsformen aus dem Stand der Technik eine Vielzahl von Komponenten erforderlich. Die Luftausströmer aus dem Stand der Technik benötigen daher auch viel Bauraum, bspw. für mindestens zwei Stellmotoren und eine Vielzahl von Kinematikbauteilen.

Aufgabe der vorliegenden Erfindung ist es, eine Einrichtung zum Verstellen von im Wesentlichen senkrecht zueinander angeordneten verschwenkbaren Lamellen anzugeben, wobei die Anzahl der dafür erforderlichen Komponenten gegenüber bekannten Einrichtungen reduziert und das Verstellen von Lamellen vereinfacht ist.

Erfindungsgemäß wird die Aufgabe durch eine Einrichtung mit den in Anspruch 1 angegebenen technischen Merkmalen gelöst. Vorteilhafte Weiterbildungen der Erfindung sind in den Unteransprüchen im Detail angegeben.

Eine erfindungsgemäße Einrichtung zum Verstellen von im Wesentlichen senkrecht zueinander angeordneten verschwenkbaren Lamellen eines Luftausströmers weist ein erstes drehbar gelagertes Verstellelement auf, wobei das erste Verstellelement mindestens einen zylinderförmigen Abschnitt aufweist, das erste Verstellelement in dem mindestens einen zylinderförmigen Abschnitt mindestens eine Führung aufweist, in welcher ein erstes Verlagerungselement geführt ist, wobei mindestens eine in einer ersten Richtung verlaufende Lamelle über das Verlagerungselement mit dem ersten Verstellelement gekoppelt ist, und mindestens eine in einer zweiten Richtung, senkrecht zur ersten Richtung verlaufende Lamelle mit dem ersten Verstellelement gekoppelt ist. Zusätzlich weist die Einrichtung mindestens ein zweites drehbar gelagertes Verstellelement auf, wobei das erste Verstellelement mit dem mindestens einen zweiten Verstellelement und das mindestens eine zweite Verstellelement mit mindestens einer in der zweiten Richtung verlaufenden Lamelle gekoppelt ist, und die Drehachse des ersten Verstellelements parallel zur Drehachse des mindestens einen zweiten Verstellelements verläuft, wobei sowohl die mindestens eine in der ersten Richtung verlaufende Lamelle als auch die mindestens eine in der zweiten Richtung verlaufende Lamelle durch Rotation des ersten Verstellelements verschwenkbar sind.

Die Einrichtung ermöglicht über das erste Verstellelement ein Verschwenken der in der ersten Richtung verlaufenden Lamelle, wobei über die Kopplung der in der zweiten Richtung verlaufenden Lamelle mit dem ersten Verstellelement auch ein Verschwenken der in der zweiten Richtung verlaufenden Lamelle ermöglicht wird. Die Einrichtung ermöglicht somit allein über das erste Verstellelement ein Verschwenken von im Wesentlichen senkrecht zueinander angeordneten Lamellen. In der mindestens einen Führung des ersten Verstellelementes ist das erste Verlagerungselement geführt, welches bspw. ein Stift an der in der ersten Richtung verlaufenden Lamelle oder ein Verlagerungselement ist, welches mit einem Stift an der in der ersten Richtung verlaufenden Lamelle gekoppelt ist. Der Stift ist beabstandet zu einer Verschwenkachse der in der ersten Richtung verlaufenden Lamelle angeordnet, so dass eine Bewegung des Stifts die Lamelle verschwenkt, wobei die Lamelle über ihre Verschwenkachse drehbar/verschwenkbar in einem Gehäuse bspw. über Lagerzapfen gelagert ist. Die mindestens eine in der zweiten Richtung verlaufende Lamelle kann bspw. über Koppelelemente mit dem ersten Verstellelement derart gekoppelt sein, dass die Rotation des drehbar gelagerten ersten Verstellelements in eine longitudinale Bewegung übertragen wird. Die in der zweiten Richtung verlaufende Lamelle ist gleichfalls wie die in der ersten Richtung verlaufende Lamelle bspw. über durch ihre Verschwenkachse verlaufende Lagerzapfen drehbar/verschwenkbar in einem Gehäuse gelagert und weist einen Stift auf, der beabstandet zu der Verschwenkachse an der in der zweiten Richtung verlaufenden Lamelle angeordnet ist. Eine longitudinale Bewegung eines Koppelelements kann dann ein Verschwenken der in der zweiten Richtung verlaufenden Lamelle bewirken. Jedoch ist die Einrichtung nicht auf die vorstehend beispielhaft angeführten Ausführungsbeispiele beschränkt und kann über verschiedene Mittel, Vorrichtungen und Komponenten ein Verschwenken von mindestens einer in der ersten Richtung verlaufenden Lamelle und ein Verschwenken von mindestens einer in der zweiten Richtung verlaufenden Lamelle bewirken, wobei auch mehrere in der ersten Richtung verlaufende Lamellen und mehrere in der zweiten Richtung verlaufende Lamellen verschwenkt werden können. Ferner kann ein Verdrehen des ersten Verstellelements ein Verschwenken der in der ersten Richtung verlaufenden Lamellen und ein Verschwenken der in der zweiten Richtung verlaufenden Lamellen bewirken, wobei die Lamellen in einer Richtung (erste und/oder zweite Richtung) verschieden zueinander verschwenkt werden können und auch nur ein Verschwenken von in der ersten Richtung verlaufenden Lamellen oder ein Verschwenken von in der zweiten Richtung verlaufenden Lamellen möglich ist.

Das erste Verstellelement kann ein zweites Stellglied aufweisen, welches parallel zu einer Drehachse des erstes Verstellelements angeordnet ist und das zweite Stellglied kann mit der mindestens einen in der zweiten Richtung verlaufenden Lamelle gekoppelt sein. Das erste Verstellelement kann bspw. an einer oberen Fläche des zylinderförmigen Abschnitts ein zweites Stellglied aufweisen, wobei das zweite Stellglied mit mindestens einer in einer zweiten Richtung, im Wesentlichen senkrecht zur ersten Richtung verlaufenden Lamelle gekoppelt ist. Hierbei kann das zweite Stellglied ein Stift oder Zapfen sein, der von der oberen Fläche absteht und beabstandet zur Drehachse des ersten Verstellelements angeordnet ist. Der Stift ist bspw. in der Öffnung einer Koppelstange aufgenommen, wobei die Koppelstange mindestens eine weitere Öffnung für einen Zapfen oder Stift aufweist, der mit der in der zweiten Richtung verlaufenden Lamelle beabstandet zu der Verschwenkachse der in der zweiten Richtung verlaufenden Lamelle verbunden ist. Die Öffnung ist hierbei als Langloch ausgebildet und erstreckt sich im Wesentlichen in einem rechten Winkel zur Verschieberichtung der Koppelstange.

Das Verlagerungselement kann zudem ein erstes Stellglied aufweisen, das in der mindestens einen Führung an der äußeren Umfangsfläche des zylinderförmigen Abschnitts des ersten Verstellelements geführt ist.

Das Verschwenken der in der ersten Richtung verlaufenden Lamelle wird durch die mindestens eine Führung an der äußeren Umfangsfläche des ersten Verstellelementes erreicht. Beim Verdrehen des ersten Verstellelementes wird das erste Stellglied in der Führung geführt und überträgt die Bewegung auf die in der ersten Richtung verlaufenden Lamelle, wobei diese entsprechend der Führung verschwenkt wird. Zugleich erfolgt beim Verdrehen des ersten Verstellelementes eine Positionsänderung des zweiten Stellgliedes. Da das zweite Stellglied mit der in der zweiten Richtung verlaufenden Lamelle gekoppelt ist, erfolgt beim Verdrehen des Verstellelementes ein Verschwenken der in der zweiten Richtung verlaufenden Lamelle. Zum Verschwenken der senkrecht zueinander angeordneten Lamellen ist es ausreichend, das erste Verstellelement zu verdrehen. Das Verdrehen des ersten Verstellelementes kann linksherum bzw. rechtsherum erfolgen. Hierbei ergeben sich in Abhängigkeit des Grades des Verdrehens ein entsprechendes Verschwenken der in der ersten Richtung verlaufenden Lamelle und ein entsprechendes Verschwenken der in der zweiten Richtung verlaufenden Lamelle.

Das zweite Stellglied kann bspw. an der äußeren Umfangskante der oberen Fläche angeordnet sein. Beim Verdrehen des ersten Verstellelementes kann ein Verschwenken der in der zweiten Richtung verlaufenden Lamelle erfolgen, da das zweite Stellglied eine kreisende Bewegung ausführt und mit der in der zweiten Richtung verlaufenden Lamelle gekoppelt ist. Insbesondere können dann Abschnitte der mindestens einen Führung mit einer Steigung und einer Steigung gleich Null so gewählt sein, dass sämtliche Stellungen der in der zweiten Richtung verlaufenden Lamelle ausgeführt werden können, ohne dass die in der ersten Richtung verlaufenden Lamelle verschwenkt werden muss. Beim Verdrehen des ersten Verstellelements erfolgt stets eine Bewegung des zweiten Stellglieds.

Das Verlagerungselement kann bspw. über Führungsmittel parallel zur Längsachse des ersten Verstellelements verschiebbar sein. Die Führungsmittel stellen jeweils sicher, dass das erste Verlagerungselement eine Bewegung nur parallel zur Längsachse des ersten Verstellelements durchführen kann. Das erste Verlagerungselement ist mit der in der ersten Richtung verlaufenden Lamelle gekoppelt, so dass die longitudinale Bewegung des Verlagerungselementes ein Verschwenken der in der ersten Richtung verlaufenden Lamelle bewirkt. Ferner weist das Verlagerungselement das erste Stellglied auf, welches in der Führung des ersten Verstellelements geführt ist. Wird das erste Verstellelement um seine Längsachse gedreht, bewegt sich das erste Stellglied mit dem Verlagerungselement entsprechend der Drehrichtung des ersten Verstellelementes nach oben oder unten.

Das erste Verstellelement ist mit dem mindestens einen zweiten Verstellelement und das mindestens eine zweite Verstellelement ist mit mindestens einer in der zweiten Richtung verlaufenden Lamelle gekoppelt ist. Die Drehachse des mindestens einen zweiten Verstellelements verläuft in einem Winkel von 90° zu der Drehachse des ersten Verstellelements. Es können auch mehrere zweite Verstellelemente vorgesehen sein, die bspw. über ein Koppelelement gekoppelt sind. Die Rotation des ersten Verstellelements bewirkt somit stets eine Rotation des mindestens einen zweiten Verstellelements.

Das mindestens eine zweite Verstellelement kann auch scheibenförmig ausgebildet sein und die Drehachse des mindestens einen zweiten Verstellelements kann parallel zu der Drehachse des ersten Verstellelements und/oder konzentrisch zu der Drehachse des ersten Verstellelements verlaufen. Der Durchmesser des zweiten Verstellelements kann größer, kleiner oder im Wesentlichen genauso groß wie der Durchmesser des zylinderförmigen Abschnitts des ersten Verstellelements sein. Die Höhe des scheibenförmigen zweiten Verstellelements ist in den meisten Ausführungen deutlich kleiner als die Höhe des ersten Verstellelements oder des zylinderförmigen Abschnitts des ersten Verstellelements.

Das erste Verstellelement und das zweite Verstellelement können in weiteren Ausführungen auch verdrehsicher miteinander verbunden und/oder als Einheit ausgebildet sein. Das erste Verstellelement kann bspw. eine größere Erstreckung in Längsrichtung entlang der Drehachse aufweisen als das zweite fest mit dem ersten Verstellelement verbundene oder als Einheit mit diesem ausgebildete Verstellelement. Dazu kann das zweite Verstellelement auch einen größeren Durchmesser aufweisen als das erste Verstellelement. Die Verbindung des ersten Verstellelements mit dem zweiten Verstellelement kann beispielsweise über korrespondierende Verbindungselemente erfolgen.

Das mindestens eine zweite Verstellelement kann einen umlaufenden Zahnradabschnitt aufweisen, der mit einem umlaufenden Zahnradabschnitt des ersten Verstellelements in Eingriff steht. Die umlaufenden Zahnradabschnitte können sich sowohl um den gesamten Umfang eines scheibenförmigen Verstellelements und/oder eines zylinderförmigen Abschnitts eines Verstellelements als auch nur um einen Teil eines scheibenförmigen Verstellelements und/oder eines zylinderförmigen Abschnitts eines Verstellelements erstrecken. Die Zahnradschnitte können im Wesentlichen als Zahnräder oder Kegelräder bzw. Zahnrad- oder Kegelradabschnitte ausgebildet sein. Über die Zahnradabschnitte wird eine einfache Koppelung des ersten Verstellelements und des mindestens einen zweiten Verstellelements erreicht. Die Zahnradabschnitte können auch so ausgebildet sein, dass eine Über- oder Untersetzung der Drehbewegung des ersten Verstellelements oder des zweiten Verstellelements zu der Drehbewegung des zweiten Verstellelements oder des ersten Verstellelements erfolgt.

Die Einrichtung kann eine Vielzahl von zweiten Verstellelementen aufweisen, wobei die zweiten Verstellelemente eine Führung aufweisen und in den Führungen ein Verstellglied zum Verschwenken von in der zweiten Richtung verlaufenden Lamellen führbar aufgenommen ist, und wobei die zweiten Verstellelemente miteinander und mit dem ersten Verstellelement gekoppelt sind. In einer Ausführungsform sind die zweiten Verstellelemente scheibenförmig ausgebildet. Die scheibenförmigen zweiten Verstellelemente weisen bspw. an ihrer Unterseite die Führung und zusätzlich an der gegenüberliegenden Oberseite einen Koppelstift auf, der beabstandet zu der Drehachse der zweiten Verstellelemente angeordnet ist. Die Koppelstifte der zweiten Verstellelemente sind in Öffnungen eines Koppelelements, wie z.B. einer Koppelstange, aufgenommen und das Koppelelement weist an einem Ende eine weitere Öffnung auf, in der bspw. das zweite Stellglied des ersten Verstellelements aufgenommen ist. Die weitere Öffnung ist hierzu als Langloch ausgebildet und erstreckt sich orthogonal zur Verschieberichtung der Koppelstange. In den Führungen der zweiten Verstellelements ist bspw. jeweils ein zweiter Stift, der in dieser Ausführungsform das Verstellglied ist, aufgenommen, wobei der Stift beabstandet zu der Verschwenkachse der in der zweiten Richtung verlaufenden Lamelle angeordnet ist. Wird das erste Verstellelement verdreht, erfolgt neben dem Verschwenken der in der ersten Richtung verlaufenden Lamelle eine Bewegung des Koppelelements, wobei die Bewegung des Koppelelements ein gemeinsames Verdrehen der zweiten Verstellelemente bewirkt. Über die in den Führungen der zweiten Verstellelemente aufgenommenen zweiten Stifte erfolgt dann ein Verschwenken der in der zweiten Richtung verlaufenden Lamellen. Die Führungen in den zweien Verstellelementen können unterschiedlich ausgebildet sein, so dass neben einem gemeinsamen Verschwenken der in der zweiten Richtung verlaufenden Lamellen um einen gleichen Betrag auch ein Verschwenken um unterschiedliche Beträge möglich ist ("Spot" und "Diffus"-Stellung der in der zweiten Richtung verlaufenden Lamellen). Die Führungen können als Endlosführungen ausgebildet sein. Hierzu weisen die zweiten Verstellelemente eine geschlossene Führungsnut auf, in der das Verstellglied geführt ist. Die Form der Führungsnut kann beliebig, in Abhängigkeit der gewünschten Verschwenkbarkeit der in der zweiten Richtung verlaufenden Lamellen gewählt werden.

Das zweite Verstellelement kann mindestens eine Führung aufweisen und in der mindestens einen Führung kann ein Verstellglied zum Verschwenken der mindestens einen in der zweiten Richtung verlaufenden Lamelle führbar aufgenommen sein. Das zweite Verstellelement kann in diesen Ausführungen ebenfalls scheibenförmig ausgebildet sein und an einer Unterseite die mindestens eine Führung aufweisen, welche wiederum als geschlossenen Führungsbahn (Führungsnut) ausgebildet sein kann, in der das Verstellglied geführt ist. Das zweite Verstellelement kann auch zwei oder mehr Führungen aufweisen. In jeder Führung ist dann ein Verstellglied geführt. Die Verstellglieder können jeweils mit einer Koppelstange gekoppelt sein, welche wiederum mit einer bestimmten Anzahl von in der zweiten Richtung verlaufenden Lamellen gekoppelt ist. Die Verstellglieder können aber auch jeweils mit einer in der zweiten Richtung verlaufenden Lamelle gekoppelt sein, wobei die Verstellglieder bspw. Stifte sind, die an den in der zweiten Richtung verlaufenden Lamellen beabstandet zur Verschwenkachse angeordnet sind. In einer anderen Ausführung sind die Stifte der in der zweiten Richtung verlaufenden Lamellen in Öffnungen in der Koppelstange aufgenommen und die Koppelstage weist einen zusätzlichen Stift (Verstellglied) auf, der in der Führung geführt ist. Es kann aber auch ein Stift einer Gruppe von in der zweiten Richtung verlaufenden Lamellen eine größere Länge als die anderen zu dieser Gruppe gehörenden Lamellen aufweisen und dieser Stift ragt über eine Öffnung in der Koppelstange hinaus bis in die Führung in dem zweiten Verstellelement. Bei mindestens zwei Führungen können diese so ausgebildet sein, dass die der jeweiligen Führung zugeordneten Lamellen sowohl gemeinsam um einen bestimmten Betrag als auch um verschiedene Beträge verschwenkt werden ("Spot"- und "Diffus"-Stellung).

Das zweite Verstellelement oder das erste Verstellelement können mit einem Übertragungselement gekoppelt sein und das Übertragungselement kann mindestens eine Führungsbahn aufweisen, in der ein Verstellglied zum Verschenken der mindestens einen in der zweiten Richtung verlaufenden Lamelle führbar aufgenommen ist, wobei der umlaufende Zahnradabschnitt des zweiten Verstellelements oder der umlaufende Zahnradabschnitt des ersten Verstellelements mit einem Zahnstangenabschnitt des Übertragungselements in Eingriff stehen. Das Übertragungselement ist bspw. entlang einer Führung verschiebbar gelagert und in der mindestens einen Führungsbahn ist ein Stift (Verstellglied) einer Lamelle aufgenommen, wobei der Stift beabstandet zu der Verschwenkachse einer Lamelle an der Lamelle angeordnet ist. Ein Verdrehen des ersten Verstellelements bewirkt entweder direkt eine Verlagerung des Übertragungselements über dessen Zahnstangenabschnitt oder über eine Kopplung des ersten Verstellelements mit dem zweiten Verstellelement und dessen Kopplung mit dem Zahnstangenabschnitt des Übertragungselements. Das Übertragungselement kann auch mehrere Führungsbahnen aufweisen, in welcher jeweils ein Verstellglied aufgenommen ist, wobei das Verstellglied entweder nur mit einer Lamelle verbunden/gekoppelt ist oder mit einer Gruppe von Lamellen gekoppelt ist. Ebenso können die Führungsbahnen analog zu den vorstehenden Ausführungen unterschiedlich ausgebildet sein, so dass ein gemeinsames Verschwenken aller in einer Richtung verlaufenden Lamellen oder ein zueinander verschiedenes Verschwenken dieser Lamellen erfolgt. Gegenüber den vorstehend beschriebenen Ausführungen mit Endlosführungen sind die Führungsbahnen des Übertragungselements nicht endlos ausgebildet.

Die mindestens eine Führung kann als Helixkurve ausgebildet sein. Hierbei erfolgt beim Verdrehen des ersten Verstellelementes ein Verschwenken der in der ersten Richtung verlaufenden Lamelle in Abhängigkeit der Steigung der Helixkurve. Bspw. wird das Verlagerungselement während des Verdrehens des ersten Verstellelementes beispielsweise nach oben oder unten (in Abhängigkeit der Drehrichtung des ersten Verstellelementes) bewegt, wobei ein Verschwenken der in der ersten Richtung verlaufenden Lamelle nach oben und unten erfolgt.

Die mindestens eine Führung kann als abgestufte Helixkurve ausgebildet sein, wobei die abgestufte Helixkurve gegenüber der Querschnittsfläche des zylinderförmigen Abschnitts des ersten Verstellelements Abschnitte mit einer Steigung gleich Null und Abschnitte mit einer Steigung aufweist. Die abgestufte Helixkurve bewirkt hierbei, dass die der Helixkurve zugeordneten Lamelle während des Verdrehens des ersten Verstellelementes nicht verschwenkt wird, wenn sich das Verlagerungselement und/oder das Verstellglied in einem Abschnitt der Führung mit Steigung gleich Null befinden. Ein Verschwenken einer Lamelle erfolgt nur in den Abschnitten der Führung mit einer Steigung. Befindet sich bspw. das Verlagerungselement in einem Abschnitt ohne Steigung und wird das erste Verstellelement weiter verdreht, so erfolgt kein Verschwenken der in der ersten Richtung verlaufenden Lamelle, jedoch kann ein Verschwenken der in der zweiten Richtung verlaufenden Lamelle erfolgen, wenn die Führung in dem zweiten Verstellelement entsprechend ausgebildet ist. Hierbei kann in Abhängigkeit der Ausgestaltung der abgestuften Helixkurve erreicht werden, dass bestimmte Stellungen der Lamelle(n) auf Grund der Anordnung und Anzahl der Abschnitte mit einer Steigung gleich Null und der Abschnitte mit einer Steigung erfolgen.

Ferner können sich die Abschnitte mit einer Steigung gleich Null und die Abschnitte mit einer Steigung abwechseln.

In weiteren Ausgestaltungen ist vorgesehen, dass sich ein Abschnitt mit einer Steigung gleich Null und ein Abschnitt mit einer Steigung gemeinsam im Wesentlichen um den halben Umfang des ersten Verstellelements erstrecken. In einer solchen Ausgestaltung kann bspw. eine in der zweiten Richtung verlaufende Lamelle von einer ersten Extremstellung in eine zweite Extremstellung überführt werden (durch Verdrehen des ersten Verstellelementes), wobei die in der ersten Richtung verlaufende Lamelle nicht verschwenkt wird. Ebenso kann auch umgekehrt ein Verschwenken der in der zweiten Richtung verlaufenden Lamelle von einer ersten Extremstellung in eine zweite Extremstellung erfolgen, wobei die in der ersten Richtung verlaufende Lamelle nicht verschwenkt wird.

Da Lamellen in der Regel nicht bis zu 90° verschwenkt werden, können sich die Abschnitte mit einer Steigung gleich Null nur annähernd bis zu dem halben Umfang des ersten Verstellelements erstrecken, jedoch nicht den gesamten halben Umfang umfassen. Ferner können die Abschnitte mit einer Steigung nur eine geringe Steigung aufweisen, so dass die Lamelle beim Übergang von einem ersten Abschnitt ohne Steigung in einen zweiten Abschnitt ohne Steigung nur um ein bestimmtes geringes Maß verschwenkt werden. Je mehr entsprechende Abschnitte vorgesehen sind, desto feiner können die Grade des Verschwenkens der Lamelle(n) eingestellt werden.

Die in der ersten Richtung verlaufende Lamelle kann über eine erste Koppeleinrichtung mit weiteren in der ersten Richtung verlaufenden Lamellen verbunden sein und/oder die in der zweiten Richtung verlaufende Lamelle kann über eine zweite Koppeleinrichtung mit weiteren in der zweiten Richtung verlaufenden Lamellen verbunden sein. Die erste Koppeleinrichtung und die zweite Koppeleinrichtung bewirken ein gemeinsames Verschwenken der in der ersten Richtung verlaufenden Lamellen und ein gemeinsames Verschwenken der in der zweiten Richtung verlaufenden Lamellen.

Die erste Koppeleinrichtung kann bspw. einen ersten Verstellabschnitt mit einem Langloch und das Verlagerungselement kann einen Mitnehmer aufweisen, der in dem Langloch aufgenommen ist. Hierbei ergibt sich konstruktiv eine einfache Übertragung der Verschiebebewegung des Verlagerungselementes parallel zur Längsachse des ersten Verstellelements in eine Schwenkbewegung der in der ersten Richtung verlaufenden Lamellen über die erste Koppeleinrichtung. Die erste Koppeleinrichtung ist mit den in der ersten Richtung verlaufenden Lamellen beispielsweise über Zapfen verbunden, die beabstandet zu Lagerzapfen der in der ersten Richtung verlaufenden Lamelle angeordnet sind. Die in der ersten Richtung verlaufenden Lamellen sind hierbei über die Lagerzapfen verschwenkbar. Die Lagerzapfen definieren dabei die Schwenkachse. Wird nun die erste Koppeleinrichtung über den Mitnehmer des Verlagerungselementes parallel zur Längsachse des Verstellelementes analog zur Verlagerung des Verlagerungselementes bewegt, so bewirkt die erste Koppeleinrichtung ein Verschwenken der in der ersten Richtung verlaufenden Lamellen. Das Langloch in dem ersten Verstellabschnitt dient dazu, ein Verschwenken der in der ersten Richtung verlaufenden Lamellen unabhängig von deren Grad des Verschwenkens sicherzustellen, ohne dass es zu einem Verkanten oder Blockieren kommt.

Die zweite Koppeleinrichtung kann in einer Ausführungsform einen zweiten Verstellabschnitt mit einem Langloch aufweisen und das zweite Stellglied kann in dem Langloch aufgenommen sein. In dieser Ausgestaltung erfolgt durch den zweiten Verstellabschnitt der zweiten Koppeleinrichtung mit dem Langloch beim Verdrehen des ersten Verstellelements eine Übertragung der kreisenden Bewegung des zweiten Stellgliedes in eine longitudinale Bewegung, orthogonal zur Längsachse des ersten Verstellelementes. Wird das erste Verstellelement um seine Längsachse verdreht, so erfolgt über die zweite Koppeleinrichtung ein Verschwenken der in der zweiten Richtung verlaufenden Lamellen. Die in der zweiten Richtung verlaufenden Lamellen weisen beispielsweise Zapfen auf, die beabstandet zu den Schwenkachsen der in der zweiten Richtung verlaufenden Lamellen angeordnet sind. Die in der zweiten Richtung verlaufenden Lamellen sind beispielsweise über Lagerzapfen, die die Schwenkachse definieren, verschwenkbar in einem Gehäuse des Luftausströmers gelagert. Wird die zweite Koppeleinrichtung im Wesentlichen parallel zur Längsachse der in der ersten Richtung verlaufenden Lamellen bewegt, so erfolgt durch die Kopplung der in der zweiten Richtung verlaufenden Lamellen über die Zapfen mit der zweiten Koppeleinrichtung ein entsprechendes Verschwenken der in der zweiten Richtung verlaufenden Lamellen.

Ferner kann in weiteren Ausführungen auch ein Verschwenken der in der zweiten Richtung verlaufenden Lamellen analog zu einem Verschwenken der in der ersten Richtung verlaufenden Lamellen erfolgen. Hierzu ist ein zweites Verstellelement mit mindestens einer Führung vorgesehen, wobei das Verstellglied ebenso mit einem Verlagerungselement zum Verschwenken der in der zweiten Richtung verlaufenden Lamellen gekoppelt ist.

Eine erste Gruppe von in der ersten Richtung verlaufenden Lamellen kann über das erste Verlagerungselement mit dem ersten Verstellelement und mindestens eine zweite Gruppe von in der ersten Richtung verlaufenden Lamellen kann über ein zweites Verlagerungselement mit dem ersten Verstellelement gekoppelt sein und/oder eine erste Gruppe von in der zweiten Richtung verlaufenden Lamellen kann über eine erste Koppelvorrichtung mit dem zweiten Verstellelement oder mit dem Übertragungselement und mindestens eine zweite Gruppe von in der zweiten Richtung verlaufenden Lamellen kann über eine zweite Koppelvorrichtung mit dem zweiten Verstellelement oder mit dem Übertragungselement gekoppelt sein. Die ersten und zweiten Gruppen der in der ersten Richtung verlaufenden Lamellen können dabei gemeinsam um einen bestimmten Betrag oder um einen zueinander verschiedenen Betrag verschwenkt werden. Darüber hinaus können auch die ersten und zweiten Gruppen der in der zweiten Richtung verlaufenden Lamellen gemeinsam um einen bestimmten Betrag oder um einen zueinander verschiedenen Betrag verschwenkt werden.

Eine Vielzahl von in der ersten Richtung verlaufenden Lamellen kann über jeweils ein separates Verlagerungselement in separaten Führungen in dem ersten Verstellelement mit dem ersten Verstellelement gekoppelt sein und/oder eine Vielzahl von in der zweiten Richtung verlaufenden Lamellen kann jeweils in einer separaten Führung in dem zweiten Verstellelement mit dem zweiten Verstellelement oder jeweils mit einem separaten zweiten Verstellelement oder jeweils in einer separaten Führungsbahn in dem Übertragungselement mit dem Übertragungselement gekoppelt sein. In diesen Ausführungen können alle in der ersten Richtung verlaufenden Lamellen gemeinsam um einen bestimmten Betrag oder jede Lamelle um einen verschiedenen Betrag zu den anderen in der ersten Richtung verlaufenden Lamellen verschwenkt werden. Weiter können auch alle in der zweiten Richtung verlaufenden Lamellen gemeinsam um einen bestimmten Betrag oder jede Lamelle um einen verschiedenen Betrag zu den anderen in der zweiten Richtung verlaufenden Lamellen verschwenkt werden. Die Lamellen in der ersten Richtung können dabei auch unterschiedlich zu den Lamellen in der zweiten Richtung verschwenkt werden. Das Verschwenken der Lamellen hängt dabei auch von der Ausbildung der Führung(en) und Führungsbahnen sowie der Abstände und Ausbildungen der Stellglieder und Verstellglieder ab.

Das erste Verstellelement oder das zweite Verstellelement können mit einer Antriebswelle und/oder mit einem Elektromotor oder einem Stellrad gekoppelt sein und/oder der Elektromotor kann elektrisch mit Mitteln zum Einstellen der Drehzahl über Eingabevorrichtungen verbunden oder die Antriebswelle kann über mechanische Vorrichtungen steuerbar sein. Über die Antriebswelle oder den Elektromotor, wobei auch der Elektromotor eine Antriebswelle aufweisen oder mit einer Antriebswelle gekoppelt sein kann, die bzw. der mit dem ersten Verstellelement oder dem zweiten Verstellelement verbunden ist, können das erste Verstellelement oder das zweite Verstellelement im Uhrzeigersinn oder gegen den Uhrzeigersinn gedreht werden. Das Verdrehen im Uhrzeigersinn oder gegen den Uhrzeigersinn bewirkt sowohl ein Verschwenken der in der ersten Richtung verlaufenden Lamellen als auch ein Verschwenken der in der zweiten Richtung verlaufenden Lamellen. Es ist daher möglich, über ein ausführendes Element (beispielsweise Elektromotor) sämtliche Verschwenkbewegungen der Lamellen eines Luftausströmers zu realisieren. Ferner kann die Antriebswelle mit einem Stellrad gekoppelt sein, wobei das Stellrad bspw. in dem Armaturenbrett eines Kraftfahrzeugs angeordnet ist und ein manuelles Verstellen ermöglicht.

Ferner kann beispielsweise die Antriebswelle mit einem Bedienrad verbunden sein, welches in einem Armaturenbrett eines Kraftfahrzeugs angeordnet ist. Wird das Bedienrad verdreht, so erfolgen ein Verschwenken der in der ersten Richtung verlaufenden Lamellen und ein Verschwenken der in der zweiten Richtung verlaufenden Lamellen. Alternativ dazu können an einem Armaturenbrett oder an anderen Stellen in einem Kraftfahrzeug (z. B. Mittenkonsole) Eingabemittel vorgesehen sein, die den Elektromotor ansteuern. Als Beispiel sind hierbei Druckknöpfe, Taster, Schieber oder sogenannte berührungsempfindliche Displays zu nennen.

Die Antriebswelle und/oder der Elektromotor können auch mit einem Getriebe gekoppelt sein. Ein Getriebe ermöglicht bspw. die Übersetzung der Drehgeschwindigkeit von langsam drehenden Elektromotoren in höhere Drehgeschwindigkeiten, um ein schnelleres Verstellen der Lamellen zu erreichen.

Bei den aus dem Stand der Technik bekannten Einrichtungen sind für in einer ersten Richtung verlaufende Lamellen und in einer zweiten Richtung verlaufende Lamellen jeweils ein Elektromotor vorgesehen. Solche Einrichtungen weisen deshalb eine Vielzahl von Komponenten auf. Dies erfordert eine komplexe Ansteuerung. Ferner benötigen die Einrichtungen aus dem Stand der Technik einen großen Bauraum. Entsprechend sind die Einrichtungen aus dem Stand der Technik auch im Hinblick auf die Kosten nachteilig. Gegenüber aus dem Stand der Technik bekannten Einrichtungen benötigen die hierin beschriebenen Einrichtungen bspw. nur einen Elektromotor, der sowohl ein Verschwenken der in der ersten Richtung verlaufenden Lamellen als auch ein Verschwenken der in der zweiten Richtung verlaufenden Lamellen realisieren kann. Darüber hinaus erfolgt die Aufteilung und Übertragung der Drehbewegung beispielsweise des Elektromotors nur über das erste Verstellelement oder das zweite Verstellelement. Weitere Komponenten sind nicht erforderlich. Die hierin beschriebenen Ausführungen kommen mit wenigen Komponenten, einem geringen Bauraum und einer einfachen Steuerung aus. Auch im Hinblick auf die Kosten sind die hierin beschriebenen Ausführungen daher vorteilhaft.

Bei einer Ausführung mit einem Elektromotor kann auch eine sogenannte "Ventilatorfunktion" erreicht werden, wobei ein diffuser Luftstrom aus dem Luftausströmer austritt. Hierbei erfolgt ein kontinuierliches Verschwenken der in der ersten Richtung verlaufenden Lamellen und der in der zweiten Richtung verlaufenden Lamellen durch ein kontinuierliches Verdrehen des ersten und/oder zweiten Verstellelementes.

Das erste Verstellelement oder das zweite Verstellelement können mit einem dritten Verstellelement und das dritte Verstellelement kann mit einer Vorrichtung zum Öffnen und Schließen der Luftzufuhr zu dem Luftausströmer gekoppelt sein. Das dritte Verstellelement kann bspw. eine Führung aufweisen, in der ein Mittel geführt ist, welches das Öffnen und Schließen der Vorrichtung nach Maßgabe der Position des Mittels in der Führung regelt. Das dritte Verstellelement kann ebenfalls einen zylinderförmigen Abschnitt mit einer Führung aufweisen oder scheibenförmig ausgebildet sein.

Das erste Verstellelement oder das zweite Verstellelement können mit einer Vorrichtung zum Öffnen und Schließen der Luftzufuhr gekoppelt sein. Das erste Verstellelement oder das zweite Verstellelement können dazu eine zusätzliche Führung aufweisen, in der ein Mittel zum Öffnen und Schließen der Vorrichtung geführt ist, wobei nach Maßgabe der Position des Mittels in der Führung das Öffnen und Schließen der Vorrichtung erfolgt. Das erste Verstellelement oder das zweite Verstellelement können auch Elemente aufweisen, die ein Öffnen und Schließen der Vorrichtung steuern. Bspw. kann ein weiteres Stellglied vorgesehen sein, das mit der Vorrichtung gekoppelt ist.

Das erste Verstellelement, das zweite Verstellelement oder das dritte Verstellelement können in weiteren Ausführungen eine Führung aufweisen, in welcher ein Verstellglied zum Öffnen und Schließen der Vorrichtung geführt ist.

In Ausführungen mit einer endlichen Führung in dem zylinderförmigen Abschnitt des ersten Verstellelementes und/oder des zweiten Verstellelements kann diese an einem oberen und unteren bzw. linken und rechten Ende begrenzt sein, wobei sich in einer Neutralstellung der Lamellen des Luftausströmers das Verlagerungselement und/oder ein Verstellglied vorzugsweise in einer mittleren Position entlang der Führung befindet. Soll nun ein diffuser Luftstrom eingestellt werden, so würde der Elektromotor beginnen, entweder links- oder rechtsherum zu drehen und sich nach dem Erreichen des Endes der Führung in die entgegengesetzte Richtung drehen, bis beispielsweise das untere Ende der Führung erreicht ist, und von dort wiederum sich in die entgegengesetzte Richtung drehen. Durch das kontinuierliche Drehen erfolgt ständig ein Verschwenken der in der ersten Richtung verlaufenden Lamellen und der in der zweiten Richtung verlaufenden Lamellen.

Um in Ausführungen mit einer endlichen Führung/Führungsbahn zu verhindern, dass das erste Verstellelement oder das zweite Verstellelement über einen oberen und einen unteren Endpunkt der Führungen hinaus verdreht werden, können die Führung als Nut ausgebildet sein. In den Endpositionen liegen dann das erste Verlagerungselement, das erste Stellglied, das Verstellglied, der Stift etc. an der Wand der Führung an und verhindern ein Weiterdrehen.

Der Durchmesser und die Höhe des ersten Verstellelements, des zweiten Verstellelements und/oder des dritten Verstellelements sind an die Ausgestaltung eines Luftausströmers anzupassen. Ferner sind die Führung(en)/Führungsbahn(en) an einen Luftausströmer und die gewünschten Verschwenkgrade der Lamellen des Luftausströmers anzupassen. Insbesondere sind die Länge der Führung(en), die Anzahl der Abschnitte mit einer Steigung gleich Null, die Anzahl der Abschnitte mit einer Steigung und die Steigung so zu wählen, dass die gewünschten Verschwenkstellungen realisiert werden. Darüber hinaus sind die Länge der Abschnitte mit einer Steigung gleich Null und die Länge der Abschnitte mit einer Steigung entsprechend der gewünschten Ausgestaltung eines Luftausströmers festzulegen. Gleiches gilt für die Endlosführungsbahnen. Die Führungsnuten sind ebenfalls in Abhängigkeit der Gegebenheiten des Luftausströmers und der gewünschten Verschwenkgrade und Stellungen der Lamellen festzulegen.

In weiteren Ausführungen ist die mindestens eine Führung des ersten Verstellelements so ausgebildet, dass sie sich geschlossen um die Umfangsfläche des zylinderförmigen Abschnitts des ersten Verstellelements erstreckt. Anstelle einer so entstandenen Ringnut könnte die Führung auch eine Steigung aufweisen (eventuell mit Abschnitten mit einer Steigung gleich Null). Die Führung würde dabei ausgehend von einem unteren Scheitelpunkt ansteigen und nach einem oberen Scheitelpunkt wieder nach unten zu dem unteren Scheitelpunkt verlaufen. Es können dabei mehrere in Längsrichtung des ersten Verstellelements übereinander bzw. nebeneinander angeordnete Führungsbahnen vorgesehen sein, so dass lediglich ein Drehen in einer Richtung (im Uhrzeigersinn oder gegen den Uhrzeigersinn) durchgeführt werden muss, um alle Stellungen der in der ersten Richtung verlaufenden Lamellen und der in der zweiten Richtung verlaufenden Lamellen zu erreichen. Hierbei kann auch einfach eine Ventilatorfunktion für einen Luftausströmer bereitgestellt werden, wobei die austretende Luft großflächig verteilt wird.

Der Vorteil einer solchen Ausführung besteht darin, dass das Verstellelement in nur einer Richtung (im Uhrzeigersinn oder gegen den Uhrzeigersinn) gedreht werden muss und auch ein Endlosbetrieb ohne Erreichen eines Endpunktes (der mindestens einen Führung) möglich ist.

Bis auf den Elektromotor können sämtliche Komponenten der vorstehend beschriebenen Einrichtungen sowie eines Luftausströmers aus Kunststoff bestehen und leicht in einem Spritzgussverfahren hergestellt werden. Es werden zudem gegenüber aus dem Stand der Technik bekannten Einrichtungen zum Verstellen von im Wesentlichen senkrecht zueinander angeordneten Lamellen eines Luftausströmers weniger Komponenten benötigt und nur durch Betätigen (Drehen im Uhrzeigersinn und/oder Drehen entgegen dem Uhrzeigersinn) eines ausführenden Elementes (erstes/zweites Verstellelement) sowohl ein Verschwenken von in der ersten Richtung verlaufenden Lamellen als auch ein Verschwenken von in der zweiten Richtung verlaufenden Lamellen erreicht.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigen
- Fig. 1 - 11: schematische Darstellungen von Komponenten eines Luftausströmers einer ersten Ausführungsform;
- Fig. 12 - 16: schematischen Darstellungen von Komponenten eines Luftausströmers einer zweiten Ausführungsform;
- Fig. 17 - 21: schematischen Darstellungen von Komponenten eines Luftausströmers einer dritten Ausführungsform;
- Fig. 22 - 27: schematischen Darstellungen von Komponenten eines Luftausströmers einer vierten Ausführungsform;
- Fig. 28 - 31: schematischen Darstellungen von Komponenten eines Luftausströmers einer fünften Ausführungsform; und
- Fig. 32: Komponenten weiterer Ausführungsformen eines Luftausströmers.

In den Figuren mit gleichen Bezugszeichen versehene Teile entsprechen im Wesentlichen einander, solange nichts anderes angegeben ist.

Bei den im Folgenden beschriebenen Einrichtungen zum Verstellen von Lamellen eines Luftausströmers werden Komponenten, die nicht wesentlich zum Verständnis der hierin beschriebenen technischen Lehre sind, nicht beschrieben, wobei einem Fachmann bekannt ist, wie eine entsprechende Umsetzung und Ausgestaltung zu erfolgen hat.

### Erste Ausführungsform

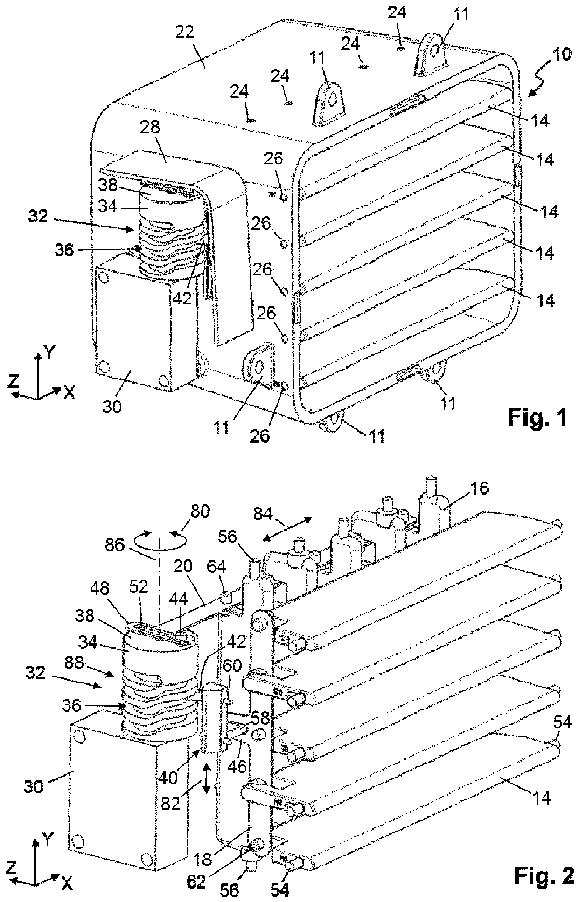

Die Fig. 1 bis 11 zeigen eine erste Ausführungsform eines Luftausströmers 10.

Fig. 1 zeigt eine schematische Darstellung von Komponenten eines Luftausströmers 10 in perspektivischer Ansicht. Der Luftausströmer 10 weist ein Gehäuse 22 auf. An dem Gehäuse 10 sind Vorsprünge 11 angeordnet.

Die Vorsprünge 11 weisen Öffnungen auf. Über die Vor-sprünge 11 kann das Gehäuse 22 mit einer in Fig. 1 nicht dargestellten Blende 12 über Verbindungselemente 13 der Blende 12 verbunden werden. Hierzu können beispielsweise Schrauben in die Öffnungen der Vorsprünge 11 eingebracht werden, um das Gehäuse 22 mit einer Blende 12 zu verbinden. Alternativ dazu können auch Stifte oder Rastmittel in die Öffnungen der Vorsprünge 11 eingebracht werden, um das Gehäuse 22 mit einer Blende 12 zu verbinden. Andere Verbindungen sind ebenfalls möglich. So kann das Gehäuse auch einstückig mit einer Blende 12 ausgebildet sein.

Das Gehäuse 22 weist Öffnungen 24 auf, wobei die Öffnungen 24 sowohl auf der oberen Seite des Gehäuses 22 und gegenüberliegend an der unteren Seite (in Fig. 1 nicht dargestellt) angeordnet sind. Die Öffnungen 24 dienen zur Aufnahme von Lagerzapfen 56 von in der zweiten Richtung Y laufenden Lamellen 16. Die in der zweiten Richtung Y verlaufenden Lamellen 16 sind daher um die Lagerzapfen 56 verschwenkbar in den Öffnungen 24 gelagert.

Das Gehäuse 22 weist Öffnungen 26 auf. Die Öffnungen 26 sind sowohl, wie in Fig. 1 dargestellt, auf der einen Seite des Gehäuses 22 angeordnet sowie auf der gegenüberliegenden Seite. In den Öffnungen 26 sind Lagerzapfen 54 von in der ersten Richtung X verlaufenden Lamellen 14 aufgenommen. Die Lamellen 14 sind über die Lagerzapfen 54 verschwenkbar in den Öffnungen 26 gelagert.

An einer Seite ist ein Elektromotor 30 angeordnet. Der Elektromotor 30 ist mit einem ersten Verstellelement 32 gekoppelt. Das erste Verstellelement 32 kann über den Elektromotor 30 sowohl in als auch gegen den Uhrzeigersinn verdreht werden. Das erste Verstellelement 32 weist eine obere Fläche 38 auf, an der ein zweites Stellglied 44 angeordnet ist, welches in einem Langloch 50 eines zweiten Verstellabschnitts 48 aufgenommen ist. Das erste Verstellelement 32 weist einen im Wesentlichen zylinderförmigen Abschnitt 88 auf. Das erste Verstellelement 32 ist in der ersten Ausführungsform im Wesentlichen über die gesamte Länge zylinderförmig ausgebildet. Zudem weist das erste Verstellelement 32 an seiner äußeren Umfangsfläche 34 eine Führung 36 auf, die als Nut in die äußere Umfangsfläche 34 eingebracht ist. In der Führung 36 ist ein erstes Stellglied 42 geführt. Das erste Stellglied 42 ist mit einem Verlagerungselement 40 verbunden (in Fig. 1 nicht dargestellt).

Das Verlagerungselement 40 und weitere Komponenten sind von einer optional vorgesehenen Abdeckung 28 in der Ansicht von Fig. 1 verborgen.

Fig. 2 zeigt eine weitere schematische Darstellung von Komponenten eines Luftausströmers 10 in perspektivischer Ansicht. Die in Fig. 2 dargestellte Ansicht stellt die Komponenten einer Einrichtung zum Verschwenken von Lamellen 14 und 16 eines Luftausströmers 10 ohne Gehäuse 22 und Blende 12 dar. Die in der ersten Richtung X verlaufenden Lamellen 14 weisen beab standet zu den Lagerzapfen 54 Zapfen 62 auf. Die Zapfen 62 sind in Öffnungen 66 einer ersten Koppeleinrichtung 18 aufgenommen. Wird die erste Koppeleinrichtung 18 in Richtung des Pfeils 82 bewegt, so erfolgt ein Verschwenken der in der ersten Richtung X verlaufenden Lamellen 14 um die Lagerzapfen 54.

Die in der zweiten Richtung Y verlaufenden Lamellen 16 weisen Zapfen 64 auf, die mit einer zweiten Koppeleinrichtung 20 verbunden sind. Die Zapfen 64 sind beabstandet zu den Lagerzapfen 56 angeordnet, so dass bei einem Bewegen der zweiten Koppeleinrichtung 20 in Richtung des Pfeils 84 die in der zweiten Richtung Y verlaufenden Lamellen 16 um die Lagerzapfen 56 verschwenkt werden. Die Zapfen 64 der Lamellen 16 sind in Öffnungen 68 der zweiten Koppeleinrichtung 20 aufgenommen.

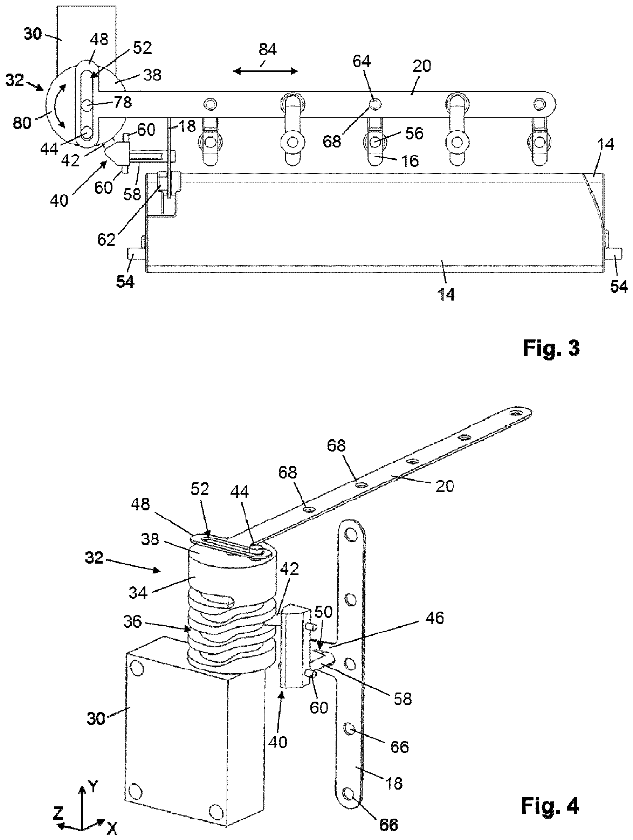

Die erste Koppeleinrichtung 18 weist einen ersten Verstellabschnitt 46 mit einem Langloch 50 auf. In dem Langloch 50 (siehe Fig. 4) ist ein Mitnehmer 58 gelagert. Der Mitnehmer 58 ist mit einem Verlagerungselement 40 verbunden. Das Verlagerungselement 40 weist seitlich Führungsstifte 60 auf. Über die Führungsstifte 60 und in Fig. 2 nicht dargestellte Führungsleisten 76 kann das Verlagerungselement 40 in Richtung des Pfeils 82 bewegt werden. An dem Verlagerungselement 40 ist ferner das erste Stellglied 42 angeordnet. Das erste Stellglied 42 greift in die Führung 36 des ersten Verstellelementes 32.

Die zweite Koppeleinrichtung 20 weist einen zweiten Verstellabschnitt 48 mit einem Langloch 52 auf. In dem Langloch 52 ist ein zweites Stellglied 44 aufgenommen.

Das zweite Stellglied 44 ist im Bereich der Umfangskante der oberen Fläche 38 des ersten Verstellelementes 32 angeordnet. Wird das erste Verstellelement 32 über den Elektromotor 30 um die Längsachse 86 gedreht, erfolgt hierbei ein Verdrehen des zweiten Stellglieds 44 um die Längsachse 86 des ersten Verstellelementes 32 in Richtung des Pfeils 80. Dadurch ergibt sich eine Verlagerung der zweiten Koppeleinrichtung 20 in Richtung des Pfeils 84. Beim Verdrehen des ersten Verstellelementes 32 um die Längsachse 86 in Richtung des Pfeils 80 wird durch das in der Führung 36 aufgenommene erste Stellglied 42 zudem das Verlagerungselement 40 nach oben bzw. unten in Richtung des Pfeils 82 bewegt.

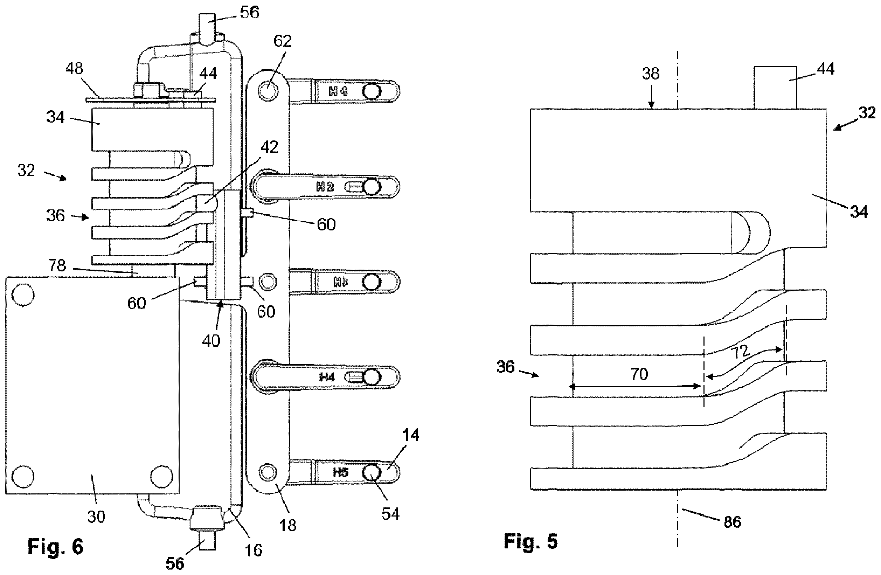

Die Führung 36 ist im Wesentlichen als abgestufte Helix ausgebildet. Die Führung 36 weist hierbei Abschnitte mit einer Steigung 72 und Abschnitte ohne Steigung 70 auf (siehe Fig. 5) .

Die in Fig. 2 gezeigte Stellung der Lamellen 14 und 16 entspricht einer Neutralstellung, wobei die in der ersten Richtung X verlaufenden Lamellen 14 und die in der zweiten Richtung Y verlaufenden Lamellen 16 nicht aus ihrer Ausgangsstellung verschwenkt sind. Hierbei befindet sich das erste Stellglied 42 über die Länge der Führung 36 gesehen im Wesentlichen im Bereich der Mitte der Führung 36. Wird das erste Verstellelement 32 in Richtung des Pfeils 80 verdreht, erfolgt kein Verschwenken der in der ersten Richtung X verlaufenden Lamellen 40, wenn sich das erste Stellglied 42 entlang eines Abschnitts 70 ohne Steigung der Führung 36 bewegt. Jedoch erfolgt hierbei ein Verschwenken der in der zweiten Richtung Y verlaufenden Lamellen 16, da das zweite Stellglied 44 in Richtung des Pfeils 80 um die Längsachse 86 verdreht wird. Wird das erste Verstellelement 32 weiter verdreht, so gelangt das erste Stellglied 42 in einen Abschnitt 72 der Führung 36 mit Steigung, so dass beim Weiterdrehen des ersten Verstellelementes 32 das erste Stellglied 42 und somit das Verlagerungselement 40 entsprechend dem Pfeil 82 nach oben oder unten bewegt werden. Hierbei erfolgt ein Verschwenken der in der ersten Richtung X verlaufenden Lamellen 14. Der Grad der Steigung in der Führung 36 gibt in den Abschnitten 72 mit Steigung an, um welches Maß die Lamellen 14 verschwenkt werden. Es ist ersichtlich, dass beim Verdrehen des ersten Verstellelementes 32 in den Abschnitten 72 mit Steigung sowohl ein Verschwenken der in der ersten Richtung X verlaufenden Lamellen 14 in Abhängigkeit des Grads der Steigung und ein Verschwenken der zweiten Richtung Y verlaufenden Lamellen 16 erfolgt und in den Abschnitten 70 ohne Steigung nur ein Verschwenken der in der zweiten Richtung Y verlaufenden Lamellen 16 erfolgt.

Fig. 3 zeigt eine schematische Darstellung von Komponenten eines Luftausströmers 10 in Draufsicht. Die obere in der ersten Richtung X verlaufende Lamelle 14 ist an ihrem rechten Ende abgerundet ausgebildet, wobei dies auf Grund einer abgerundeten Ausführung der Ecken des Gehäuses 22 (siehe Fig. 1) notwendig ist, um ein Verkanten der Lamelle 14 zu verhindern. Ferner sind sowohl die in der ersten Richtung X verlaufenden Lamellen 14 als auch die in der zweiten Richtung Y verlaufenden Lamellen 16 so ausgebildet, dass die Anbindung an die erste Koppeleinrichtung 18 bzw. die zweite Koppeleinrichtung 20 durch entsprechende Einschnitte in den Lamellen 14 und 16 über Zapfen 62 und 64 sowohl links und rechts als auch von oben und unten erfolgt. Diese alternative Ausgestaltung dient dazu, ungewollte Bewegungen (Klappern) zu verhindern und ein Spiel möglichst gering zu halten.

Wie Fig. 3 entnommen werden kann, erfolgt beim Verdrehen des ersten Verstellelementes 32 in Richtung des Pfeils 80 eine Verlagerung der zweiten Koppeleinrichtung 20 in Richtung des Pfeils 84. Das erste Verstellelement 32 ist über eine Antriebswelle 78 mit dem Elektromotor 30 verbunden. Wird die Antriebswelle 78 über den Elektromotor 30 in Richtung des Pfeils 80 verdreht, so erfolgt ebenso ein Verdrehen des ersten Verstellelementes 32. Die Antriebswelle 78 und das erste Verstellelement 32 sind entsprechend miteinander verbunden. Beim Verdrehen des ersten Verstellelementes 32 wird das an der oberen Fläche 38 des ersten Verstellelementes 32 angeordnete zweite Stellglied 44 ebenfalls in gleicher Weise in Richtung des Pfeils 80 verdreht. Das Verdrehen des zweiten Stellglieds 44 bewirkt durch die Aufnahme in dem Langloch 52 des zweiten Verstellabschnitts 48 ein Verschieben der zweiten Koppeleinrichtung 20 in Richtung des Pfeils 84. Die Lamellen 16 werden dadurch um die Lagerzapfen 56 verschwenkt. Die Zapfen 64 der Lamellen 16 sind in entsprechenden Öffnungen 68 der zweiten Koppeleinrichtung 20 verdrehbar aufgenommen.

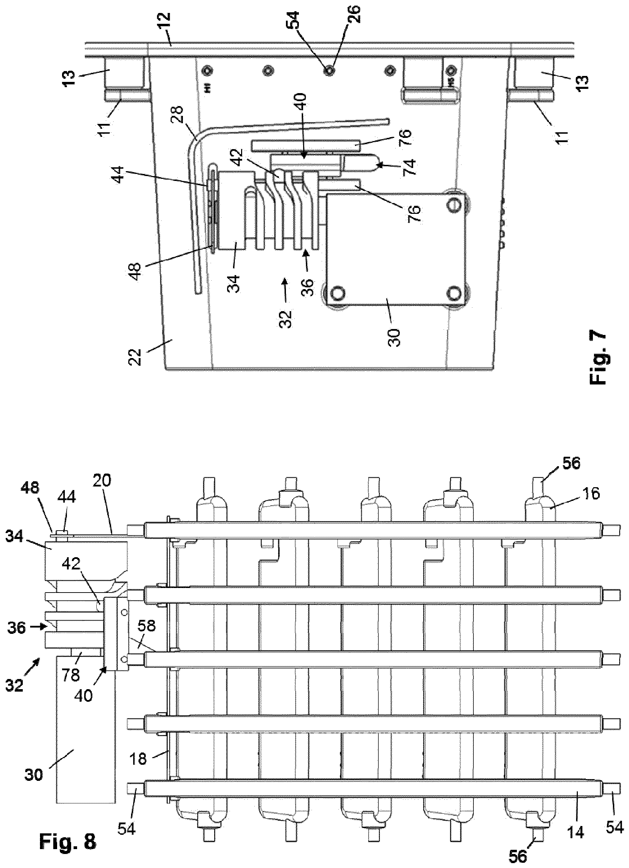

Die Position des Verlagerungselementes 40 ist über die Führungsstifte 60 und in Fig. 3 nicht dargestellte Führungsleisten 76 (siehe Fig. 7) vorgegeben, wobei das Verlagerungselement 40 nur in Richtung des Pfeils 82 (siehe Fig. 2) bewegt werden kann.

Fig. 4 zeigt eine weitere schematische Darstellung von Komponenten des Luftausströmers 10 in perspektivischer Ansicht. Fig. 4 zeigt nur den Elektromotor 30, das erste Verstellelement 32, das Verlagerungselement 40 sowie die erste Koppeleinrichtung 18 und die zweite Koppeleinrichtung 20. Der Mitnehmer 58 des Verlagerungselementes 40 ist in dem Langloch 50 des ersten Verstellabschnitts 46 aufgenommen. Die erste Koppeleinrichtung 18 weist Öffnungen 66 auf. In den Öffnungen 66 sind die Zapfen 62 der in der ersten Richtung X verlaufenden Lamellen 14 aufgenommen. Die zweite Koppeleinrichtung 20 weist Öffnungen 68 auf. In den Öffnungen 68 sind die Zapfen 64 der in der zweiten Richtung Y verlaufenden Lamellen 16 aufgenommen.

Der Mitnehmerabschnitt ist über ein nicht bezeichnetes Verbindungsteil mit dem Verlagerungselement 40 verbunden. Das optional vorgesehene Verbindungsteil unterstützt den Mitnehmer 58, wobei ein Brechen oder Verbiegen des Mitnehmers 58 verhindert wird.

Fig. 5 zeigt eine schematische Darstellung eines ersten Verstellelementes 32. Das erste Verstellelement 32 weist an seiner oberen Fläche 38 ein zweites Stellglied 44 auf, das in einem Langloch 50 eines zweiten Verstellabschnitts 48 einer zweiten Koppeleinrichtung 20 aufgenommen ist. Das erste Verstellelement 32 ist im Wesentlichen zylinderförmig ausgebildet und weist an seiner äußeren Umfangsfläche 34 eine Führung 36 auf. Die Führung 36 ist als abgestufte Helix ausgebildet und weist Abschnitte 70 ohne Steigung und Abschnitte 72 mit Steigung auf. In Fig. 5 ist jeweils nur ein Abschnitt 70 ohne Steigung und ein Abschnitt 72 mit Steigung bezeichnet.

Die Abschnitte 70 ohne Steigung erstrecken sich im Wesentlichen um die Hälfte des Umfangs des ersten Verstellelementes 32. Die Abschnitte 70 ohne Steigung erstrecken sich jedoch nicht um die gesamte Hälfte des Umfangs des ersten Verstellelementes 32. In bevorzugten Ausführungsformen erstrecken sich jeweils ein Abschnitt 70 ohne Steigung und ein Abschnitt 72 mit Steigung zusammen um die Hälfte des Umfangs des ersten Verstellelementes 32. In derartigen Ausführungen erfolgt bei einer halben Umdrehung des ersten Verstellelementes 32 um die Längsachse 86 ein Verschwenken der in der ersten Richtung X verlaufenden Lamellen 14 im Abschnitt 72 mit Steigung und anschließend ein Verschwenken von in der zweiten Richtung Y verlaufenden Lamellen 16 von einer Extremstellung in eine andere Extremstellung, ohne dass die in der ersten Richtung X verlaufenden Lamellen 14 weiter verschwenkt werden, da das erste Stellglied 42 sich während des Verdrehens im Abschnitt 70 ohne Steigung der Führung 36 befindet. Die Führung 36 weist einen Anfangs- und einen Endpunkt auf. Ferner weist die Führung 36 sieben Abschnitte 70 ohne Steigung (Steigung gleich Null) auf. Dadurch ergeben sich sieben Verschwenkstellungen der in der ersten Richtung X verlaufenden Lamellen 14.

Fig. 6 zeigt eine schematische Darstellung von Komponenten eines Luftausströmers 10 in Seitenansicht. In Fig. 6 befinden sich die in der ersten Richtung X verlaufenden Lamellen 14 und die in der zweiten Richtung Y verlaufenden Lamellen 16 in der Neutralstellung des Luftausströmers 10, wobei die Lamellen 14 und 16 nicht ausgelenkt bzw. verschwenkt sind. Hierbei befindet sich das erste Stellglied 42 im Wesentlichen in der Mitte der Führung 36.

Fig. 7 zeigt eine weitere schematische Darstellung von Komponenten eines Luftausströmers 10 in Seitenansicht, wobei das Gehäuse 22 mit der Abdeckung 28 dargestellt ist. Fig. 7 zeigt ferner eine Führungsöffnung 74. Die Führungsöffnung 74 ist als Langloch ausgebildet. Parallel zu der Führungsöffnung 74 sind Führungsleisten 76 angeordnet. In den Führungsleisten 76 sind die Führungsstifte 60 entlang des Pfeils 82 (Fig. 2) verschiebbar angeordnet. Der Mitnehmer 58 ragt durch die Füh rungsöffnung 74 hindurch. Das Gehäuse 22 weist im Bereich der zweiten Koppeleinrichtung 20 ebenfalls eine Öffnung auf, durch welche die zweite Koppeleinrichtung 20 aus dem Gehäuse 22 zumindest teilweise herausragt.

In Fig. 7 sind ferner die Verbindungselemente 13 der Blende 12 dargestellt. Das Gehäuse 22 ist durch die Vorsprünge 11 mit der Blende 12 und deren Verbindungselementen 13 sowie Verbindungsmitteln (z.B. Schrauben) verbunden.

In den Fig. 8 bis 11 sind verschiedene Stellungen der Lamellen 14 und 16 dargestellt.

In Fig. 8 sind die Zapfen 64 der Lamellen 16 nach links verschwenkt, da das erste Verstellelement 32 und das zweite Stellglied 44 entsprechend verdreht sind (Position zweites Stellglied 44 links). Dementsprechend sind die Lamellen 16 verschwenkt.

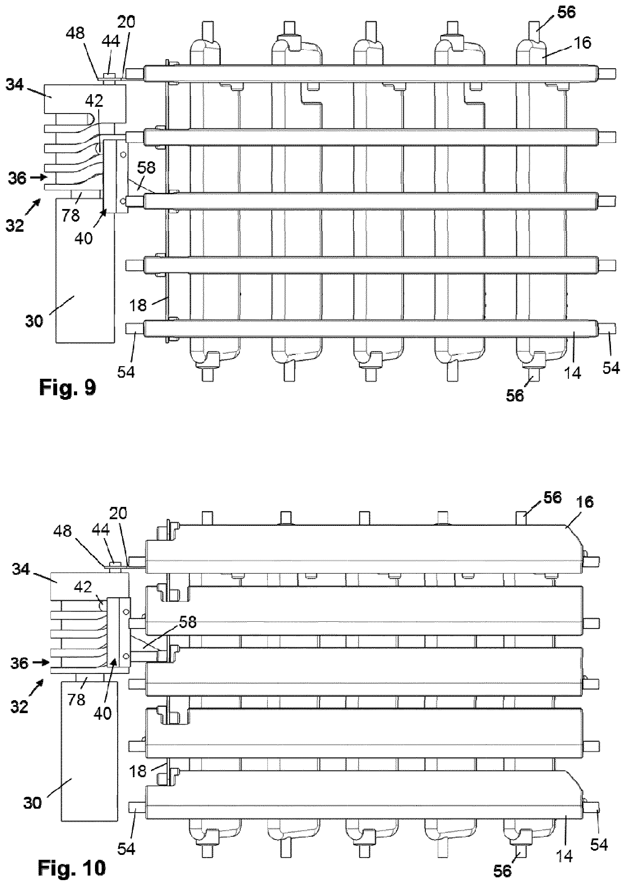

In Fig. 9 sind die Zapfen 64 der Lamellen 16 nach rechts verschwenkt, wobei das erste Verstellelement 32 und das zweite Stellglied 44 entsprechend um die Längsachse des ersten Verstellelementes 32 gedreht sind und sich das zweite Stellglied 44 in einer Position rechts befindet. Die Lamellen 16 sind entgegengesetzt zu der in Fig. 8 gezeigten Stellung verschwenkt.

Die Lamellen 14 sind bei den in den Fig. 8 und 9 gezeigten Stellungen nicht verschwenkt, da das erste Stellglied 42 auf Grund der Ausgestaltung der Führung 36 nicht nach oben oder unten verlagert wird. Das zweite Stellglied 42 befindet sich in den Stellungen der Fig. 8 und 9 in einem Abschnitt 70 mit einer Steigung gleich Null bzw. wird in einem Abschnitt 70 bewegt.

Fig. 10 zeigt einen Zustand des Luftausströmers 10, wobei sowohl die Lamellen 16 als auch die Lamellen 14 verschwenkt sind.

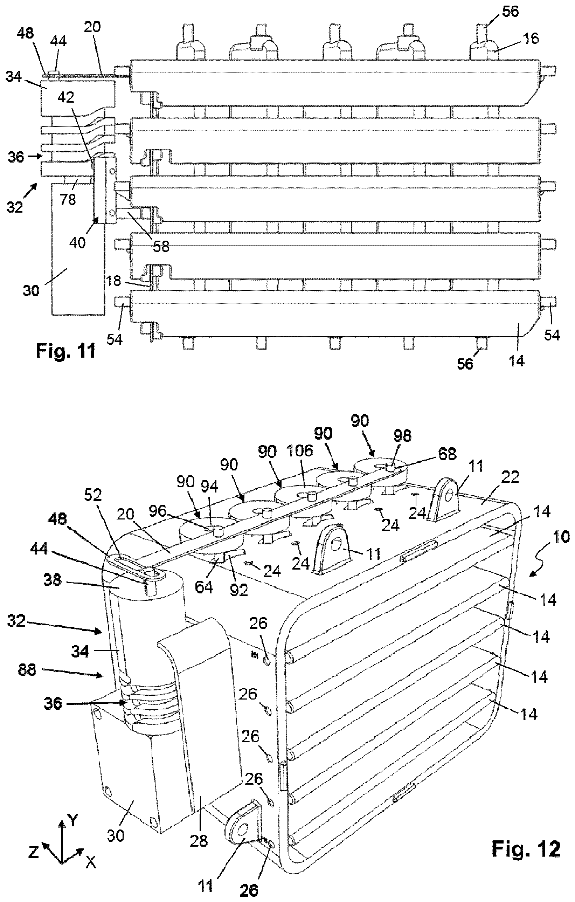

Fig. 11 zeigt ebenso einen Zustand des Luftausströmers 10, wobei sowohl die in der ersten Richtung X verlaufenden Lamellen 14 als auch die in der zweiten Richtung Y verlaufenden Lamellen 16 verschwenkt sind.

Die Fig. 10 und 11 zeigen jeweils Extremstellungen, was bedeutet, dass sowohl die Lamellen 14 als auch die Lamellen 16 sich in ihren Endstellungen (maximales Verschwenken) befinden. In Fig. 10 ist das erste Stellglied 42 an dem oberen Ende der Führung 36 angelangt und in Fig. 11 ist das erste Stellglied 42 an einem unteren Ende der Führung 36 angelangt.

Über den Elektromotor 30 wird die Antriebswelle 78 und somit das erste Verstellelement 32 verdreht. Bei einer im Wesentlichen halben Umdrehung des ersten Verstellelementes 32 wird das zweite Stellglied 44 von einer ersten Extremstellung in eine zweite Extremstellung verbracht, wobei die Lamellen 16 entweder nach links oder rechts verschwenkt werden. Befindet sich das erste Stellglied 42 in einem Abschnitt 70 ohne Steigung, so werden die Lamellen 14 nicht verschwenkt. Befindet sich das erste Stellglied 42 in einem Abschnitt 72 mit Steigung bzw. durchfährt das erste Stellglied 42 einen Abschnitt 72 mit Steigung, so werden die Lamellen 14 über die Kopplung des Verlagerungselementes 40, welches das erste Stellglied 42 aufweist, sukzessive nach oben oder unten verschwenkt, wobei Fig. 10 einen Zustand zeigt, in dem ausströmende Luft nach unten abgelenkt wird und Fig. 11 einen Zustand zeigt, in welchem ausströmende Luft aus dem Luftausströmer 10 nach oben abgelenkt wird.

Der Elektromotor 30 weist in den Figuren nicht dargestellte Anschlüsse auf, die mit Mitteln oder Einrichtungen zum Steuern des Elektromotors 30 verbunden sind. So kann in einer Mittelkonsole oder einem Armaturenbrett eines Kraftfahrzeugs ein berührungsempfindliches Bedienfeld angeordnet sein, welches die Steuerung des Elektromotors 30 ermöglicht. Die Ausbildung der Führung 36 als abgestufte Helix und das zweite Stellglied 44 ermöglichen ein Verbringen der Lamellen 14 und 16 des Luftausströmers 10 in sämtliche Stellungen, wie sie auch bei herkömmlichen Luftausströmern erreicht werden. Im Gegensatz zu bekannten Luftausströmern weist der Luftausströmer, wie er in den Fig. 1 bis 11 dargestellt ist, nur einen Elektromotor 30 auf, der mit dem ersten Verstellelement 32 und dem Verlagerungselement 40 gekoppelt ist. Diese übertragen die Bewegung des Elektromotors 30 über die erste Koppeleinrichtung 18 und die zweite Koppeleinrichtung 20 auf die Lamellen 14 und 16. Es ist damit möglich, sämtliche Stellungen sowohl der in der ersten Richtung X verlaufenden Lamellen 14 als auch der in der zweiten Richtung Y verlaufenden Lamellen 16 zu erreichen.

Der Durchmesser und die Höhe des ersten Verstellelements 32 sind an die Ausgestaltung eines Luftausströmers anzupassen. Ferner ist die Führung 36 an einen Luftausströmer und die gewünschten Verschwenkgrade der Lamellen des Luftausströmers anzupassen. Insbesondere sind die Länge der Führung 36, die Anzahl der Abschnitte 70 mit einer Steigung gleich Null, die Anzahl der Abschnitte 72 mit einer Steigung und die Steigung entsprechend zu wählen, um die gewünschten Verschwenkstellungen für einen Luftausströmer zu erreichen. Darüber hinaus sind die Länge der Abschnitte 70 mit einer Steigung gleich Null und die Länge der Abschnitte 72 mit einer Steigung entsprechend der gewünschten Ausgestaltung eines Luftausströmers festzulegen.

### Zweite Ausführungsform

Die Fig. 12 bis 16 zeigen eine zweite Ausführungsform eines Luftausströmers 10.

Der Luftausströmer 10 der zweiten Ausführungsform weist ein Gehäuse 22 auf, an dem Vorsprünge 11 angeordnet sind. Die Vorsprünge 11 weisen Öffnungen auf, über welche das Gehäuse 22 analog zu der ersten Ausführungsform eines Luftausströmers 10 mit einer nicht dargestellten Blende über Verbindungselemente verbunden werden kann.

Das Gehäuse 22 weist ebenfalls Öffnungen 24 auf, die sowohl auf der oberen Seite des Gehäuses 22 als auch auf der unteren Seite angeordnet sind. Die Öffnungen 24 dienen zur Aufnahme von Lagerzapfen 56 von in der zweiten Richtung Y verlaufenden Lamellen 16. Die in der zweiten Richtung Y verlaufenden Lamellen sind um die Lagerzapfen 56 verschwenkbar in den Öffnungen 24 gelagert.

Das Gehäuse 22 weist ferner Öffnungen 26 auf, wobei die Öffnungen 26, wie in Fig. 12 dargestellt, auf der einen Seite des Gehäuses 22 sowie auf der gegenüberliegenden Seite angeordnet sind. In den Öffnungen 26 sind Lagerzapfen 54 von in der ersten Richtung X verlaufenden Lamellen 14 aufgenommen. Die La mellen 14 sind über die Lagerzapfen 54 verschwenkbar in den Öffnungen 26 gelagert.

Ferner ist bei dem Luftausströmer ein Elektromotor 30 vorgesehen, der mit einem ersten Verstellelement 32 gekoppelt ist. Das erste Verstellelement 32 entspricht dem ersten Verstellelement 32 der ersten Ausführungsform. Ebenso ist das erste Verstellelement 32 mit den in der ersten Richtung X verlaufenden Lamellen 14 genauso gekoppelt, wie dies bereits für die erste Ausführung eines Luftausströmers 10 in den Fig. 1 bis 11 gezeigt ist. Hierbei wird auf die Ausführungen zu der Kopplung der in der ersten Richtung X verlaufenden Lamellen 14 mit dem ersten Verstellelement 32 verwiesen.

Das erste Verstellelement 32 weist an seiner oberen Fläche 38 ein zweites Stellglied 44 auf, welches beabstandet zur Drehachse des erstes Verstellelementes 32 angeordnet ist. Das zweite Stellglied 44 ist innerhalb eines Langloches 52 in einem zweiten Verstellabschnitt 48 einer zweiten Koppeleinrichtung 20 aufgenommen. Die Koppeleinrichtung 20 erstreckt sich in der ersten Richtung X entlang des Luftausströmers 10. Die zweite Koppeleinrichtung 20 weist über die Länge der zweiten Koppeleinrichtung 20 fünf Öffnungen 68 auf, in welchen Stifte 98 aufgenommen sind. Die Stifte 98 sind an der Oberseite 106 von zweiten Verstellelementen 90 angeordnet. Die zweiten Verstellelemente 90 weisen eine mittige Öffnung 94 auf. Die zweiten Verstellelemente 90 sind über die mittlere Öffnung 94 verdrehbar auf Lagerzapfen 96 angeordnet. Die Lagerzapfen 96 sind fest mit dem Gehäuse 22 verbunden. Eine Verlagerung der zweiten Koppeleinrichtung 20 bewirkt daher ein Verdrehen der zweiten Verstellelemente 90 um deren Drehachse, welche konzentrisch durch die Öffnungen 94 verläuft. Ferner weisen die zwei ten Verstellelemente 90 an deren Unterseite 104 jeweils eine Führung 102 (in Fig. 12 nicht dargestellt) auf, in welchen Zapfen 64 aufgenommen sind. Die Zapfen 64 sind beabstandet zu der Drehachse der in der zweiten Richtung Y verlaufenden Lamellen 16 mit den Lamellen 16 verbunden. Ferner weist das Gehäuse 11 Öffnungen 92 auf, durch welche die Zapfen 64 aus dem Gehäuse 22 herausgeführt sind. Die Öffnungen 92 sind so ausgebildet, dass ein Verschwenken der Lamellen 16 nicht behindert wird.

Wird das erste Verstellelement 32 verdreht, bewirkt dies ein Verschieben der zweiten Koppeleinrichtung 20 und damit ein Verdrehen der zweiten Verstellelemente 90. Entsprechend der Ausbildung der Führungen 102 an der Unterseite 104 der zweiten Verstellelemente 90 werden die in der zweiten Richtung Y verlaufenden Lamellen 16 entsprechend der Ausbildung der Führung 102 verschwenkt.

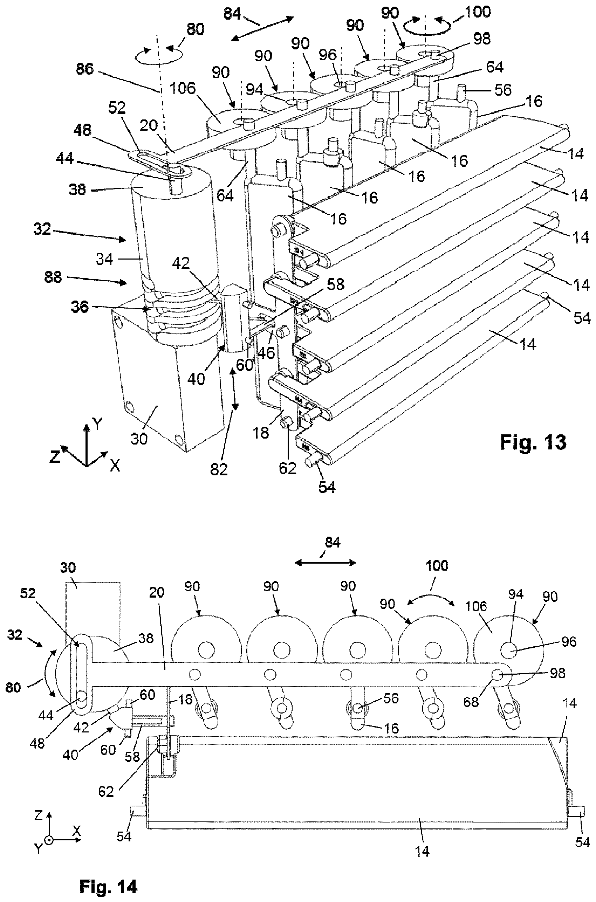

Fig. 13 zeigt eine weitere Darstellung von Komponenten des Luftausströmers 10 einer zweiten Ausführungsform, wobei das Gehäuse 22 nicht dargestellt ist. Wie bereits angegeben, wird zum Verstellen der in der ersten Richtung X verlaufenden Lamellen 14 auf die Ausführungen zu der ersten Ausführungsform Bezug genommen.

Fig. 13 zeigt die Kopplung der in der zweiten Richtung Y verlaufenden Lamellen 16 mit den zweiten Verstellelementen 90. Die Zapfen 64 der Lamellen 16 ragen von unten in die Führungen 102 der zweiten Verstellelemente 90. Wird das erste Verstellelement 32 um die Längsachse 86 in Richtung des Pfeils 80 im oder gegen den Uhrzeigersinn verdreht, erfolgt ein Verschieben der zweiten Koppeleinrichtung 20 in Richtung des Pfeils 84. Durch die Kopplung der zweiten Verstellelemente 90 über deren Stifte 98, die in den Öffnungen 68 der zweiten Koppeleinrichtung 20 aufgenommen sind, erfolgt ein Verdrehen der zweiten Verstellelemente 90 um deren Drehachse in Richtung des Pfeils 100. Die Rotation der zweiten Verstellelemente 90 bewirkt dabei ein Verschwenken der Lamellen 16 um deren durch die Lagerzapfen 56 verlaufenden Schwenkachsen.

Fig. 14 zeigt einen Blick auf die zweiten Verstellelemente 90 sowie weiterer Komponenten des Luftausströmers 10 der zweiten Ausführungsform.

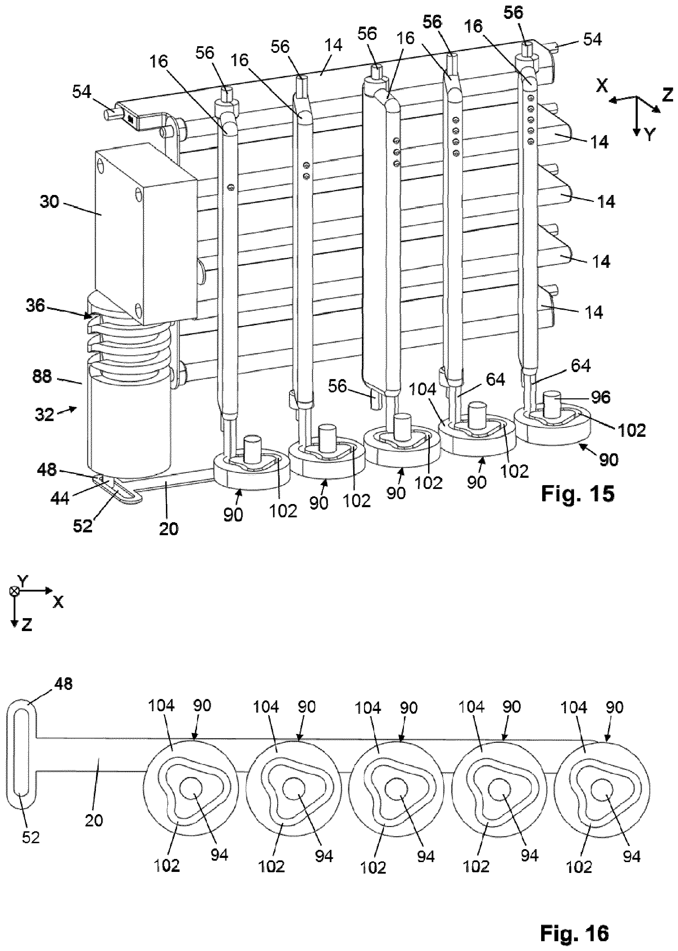

Fig. 15 zeigt eine weitere schematische Ansicht von Komponenten eines Luftausströmers 10 der zweiten Ausführungsform mit Blick auf die Rückseite des Luftausströmers 10 in einer umgekehrten Ansicht. Hierzu sei angemerkt, dass eine Anordnung der Komponenten des Luftausströmers 10 auch so erfolgen kann, wie dies in Fig. 15 dargestellt ist, wobei die zweiten Verstellelemente 90 an einer unteren Seite des Luftausströmers 10 angeordnet sind.

Die Darstellung von Fig. 15 zeigt die Führungen 102 in den zweiten Verstellelementen 90 an deren Unterseite 104. Die Darstellung von Fig. 15 zeigt jeweils nahezu identische Führungen 102, wobei jedoch jede Führung 102 unterschiedlich ausgebildet sein kann. Dadurch können verschiedene Schwenkstellungen der Lamellen 16 erreicht werden. Ferner können jedoch, wie auch in Fig. 15 angedeutet, verschiedene Schwenkstellungen der Lamellen 16 bei im Wesentlichen gleichen Führungen 102 erreicht werden, wenn die Zapfen 64 der Lamellen 16 in einer Neutralstellung der Lamellen 16 an unterschiedlichen Positionen innerhalb der Führungen 102 angeordnet sind.

Eine Verlagerung der zweiten Koppeleinrichtung 20 bewirkt das Verschwenken der zweiten Verstellelemente 90 um einen gleichen Betrag, wobei die Lamellen 16 über die in den Führungen 102 aufgenommenen Zapfen 64 in Abhängigkeit der Position der Zapfen 64 in den Führungen 102 und/oder der Ausbildung der Führungen 102 gemeinsam um einen gleichen Betrag verschwenkt werden und/oder um einen verschiedenen Betrag zueinander verschwenkt werden.

Hierbei ist es möglich, die Lamellen 16 gemeinsam zu verschwenken, so dass beispielsweise alle Lamellen 16 einen austretenden Luftstrom in eine bestimmte Richtung lenken. Ferner ist es jedoch auch möglich, die Lamellen unterschiedlich zueinander zu verschwenken, so dass beispielsweise ein diffuser Luftstrom (auffächernde Stellung der Lamellen 16) oder ein Spot-Luftstrom (aufeinander zu gerichtete Stellung der Lamellen 16) erreicht werden können.

Hierzu werden die Führungen 102 nach Maßgabe der Führung 36, insbesondere der Abschnitte mit Steigung 72 und der Abschnitte 70 ohne Steigung, ausgebildet, so dass sämtliche Stellungen der Lamellen 14 und 16 erreicht werden können.

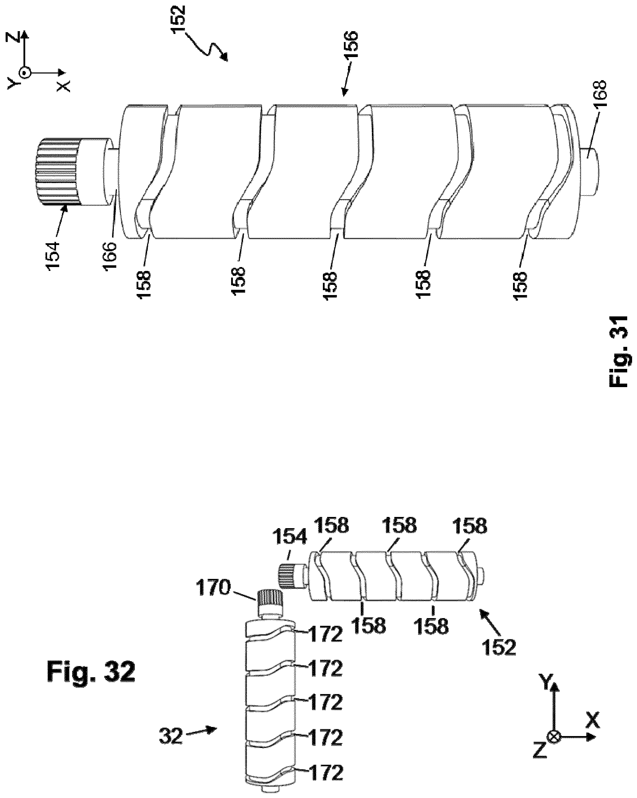

Fig. 16 zeigt einen Blick auf die zweite Koppeleinrichtung 20 und die Unterseite 104 der zweiten Verstellelemente 90. Die Darstellung von Fig. 16 zeigt fünf zweite Verstellelemente 90, welche im Wesentlichen identisch ausgebildet sind. Daher weisen die zweiten Verstellelemente 90 im Wesentlichen eine gleichgeformte Führung 102 in Form einer Führungsnut auf, in welcher die Zapfen 64 der Lamellen 16 geführt werden. Die Führungen 102 sind insbesondere als Endlosführungen ausgebildet, so dass diese keine Endstellungen aufweisen. Insbesondere bei weiteren Varianten eines Luftausströmers 10, bei welchem der Elektromotor 30 nur in einer Richtung (im oder gegen den Uhrzeigersinn) verdreht wird, sind solche zweiten Verstellelemente 90 vorteilhaft, da kein Zurückfahren in eine neutrale Stellung erforderlich ist. Für die in den Fig. 12 bis 16 gezeigte Ausführung müssen dazu die Öffnungen 92 und entsprechend die Führungen 102 so ausgebildet sein, dass ein Verdrehen der zweiten Verstellelemente 90 in nur einer Richtung (im oder gegen den Uhrzeigersinn) möglich ist. Dazu muss ebenfalls das erste Verstellelement 32 so ausgebildet sein, dass ein Verdrehen dessen in nur einer Richtung möglich ist. Dies kann bspw. dadurch erreicht werden, dass das erste Verstellelement 32 mehrere geschlossene Führungsbahnen aufweist, bspw. analog zu der Ausbildung des ersten Verstellelements 32 der in Fig. 32 gezeigten Ausführung.

Bei der Ausbildung der Führungen 102 sind diese so auszubilden, dass, wie vorstehend bereits angeführt, sowohl ein gemeinsames gleichmäßiges Verschwenken der Lamellen 16 erfolgen kann als auch ein Verschwenken der Lamellen 16 in verschiedenen Verschwenkgraden. Dadurch können Spot- und die Diffusstellungen der Lamellen 16 realisiert werden, welche einen austretenden Luftstrom aus dem Luftausströmer 10 entweder breit auffächern oder gezielt in eine bestimmte Richtung lenken.

Die Steuerung der Lamellen 14 und 16 über den Elektromotor 30 kann wie für die erste Ausführungsform beschrieben erfolgen.

### Dritte Ausführungsform

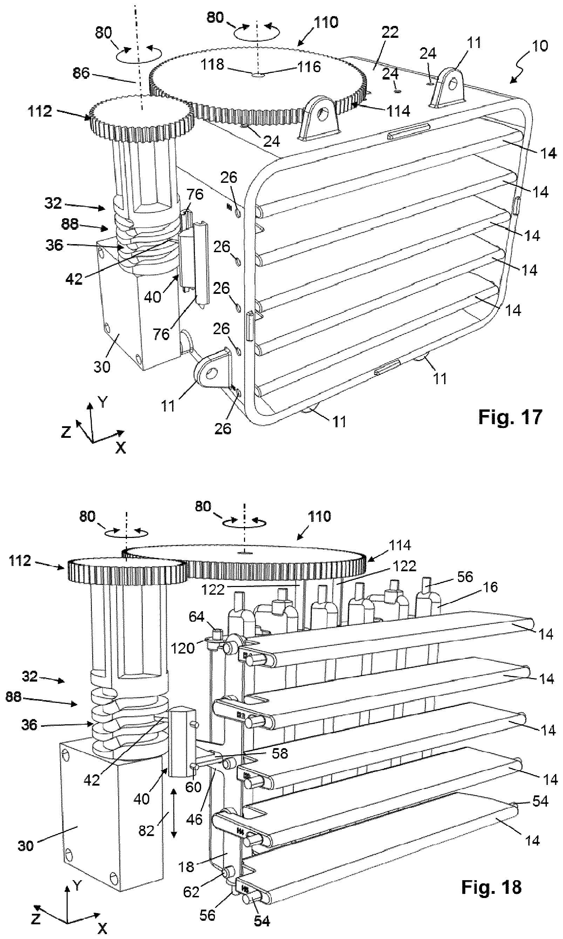

Die Fig. 17 bis 21 zeigen eine dritte Ausführungsform eines Luftausströmers 10.

Der Luftausströmer 10 der dritten Ausführungsform entspricht im Wesentlichen dem Luftausströmer 10 der ersten und zweiten Ausführungsform, jedoch ist das erste Verstellelement 32 anderes ausgebildet als die ersten Verstellelemente 32 der ersten und zweiten Ausführungsform. Anstelle einer Vielzahl von zweiten Verstellelementen 90 weist der Luftausströmer 10 der dritten Ausführungsform gegenüber der zweiten Ausführungsform ein scheibenförmiges zweites Verstellelement 110 auf. Das zweite Verstellelement 110 weist eine mittige Öffnung 118 auf, über welche das zweite Verstellelement 10 um einen Lagerzapfen 116, der fest mit dem Gehäuse 22 verbunden ist, drehbar ist. Das zweite Verstellelement 110 ist im Wesentlichen um deren durch die Öffnung 118 verlaufende Längsachse in Richtung des Pfeils 80 drehbar. Das erste Verstellelement 32 weist an dem oberen Ende einen Zahnradabschnitt 112 auf, der in Eingriff mit einem umlaufenden Zahnradabschnitt 114 des zweiten Verstellelementes 110 steht. Erfolgt ein Verdrehen des ersten Verstellelementes 32 um die Längsachse 86 in Richtung des Pfeils 80, so erfolgt ebenso ein Verdrehen des zweiten Verstellelementes 110 um dessen Längsachse in Richtung des Pfeils 80.

Das Verschwenken der in der ersten Richtung X verlaufenden Lamellen 14 erfolgt über das erste Verstellelement 32 genauso, wie bereits für die erste Ausführungsform beschrieben, wobei hierauf Bezug genommen wird.

Fig. 18 zeigt die Komponenten des Luftausströmers 10 der dritten Ausführungsform ohne Gehäuse 22. Das zweite Verstellelement 110 weist an seiner Unterseite (in Fig. 18 nicht darge stellt) zwei Führungen 128 und 130 auf, in welchen Zapfen 122 einer ersten in der zweiten Richtung Y verlaufenden Lamelle 16 und einer zweiten in der zweiten Richtung Y verlaufenden Lamelle 16 führbar aufgenommen sind. Die in der zweiten Richtung Y verlaufenden Lamellen 16 sind in zwei Gruppen aufgeteilt, wobei die ersten drei Lamellen 16 über eine zweite Koppelstange 120 miteinander verbunden sind. Die Koppelstange 120 weist Öffnungen 132 auf, in denen Zapfen 64 der Lamellen 16 aufgenommen sind. Die restlichen Lamellen 16 sind über eine dritte Koppelstange 124 miteinander verbunden, welche ebenso Öffnungen 132 aufweist, in denen Zapfen 64 der Lamellen 16 aufgenommen sind. Jedoch weisen die erste Lamelle 16 und die zweite Lamelle 16 anstelle eines Zapfens 64 jeweils einen Zapfen 122 auf, die eine größere Längserstreckung aufweisen als die Zapfen 64. Die Zapfen 122 sind ebenfalls in Öffnungen 132 der zweiten Koppelstange 120 und der dritten Koppelstange 124 aufgenommen. Erfolgt ein Verdrehen des ersten Verstellelementes 32, erfolgt ebenso ein korrespondierendes Verdrehen des zweiten Verstellelementes 110 in Richtung des Pfeils 80. Über die Führungen 128 und 130 erfolgt eine Verlagerung der Zapfen 122, was zu einem Verschwenken der Lamellen 16 führt.

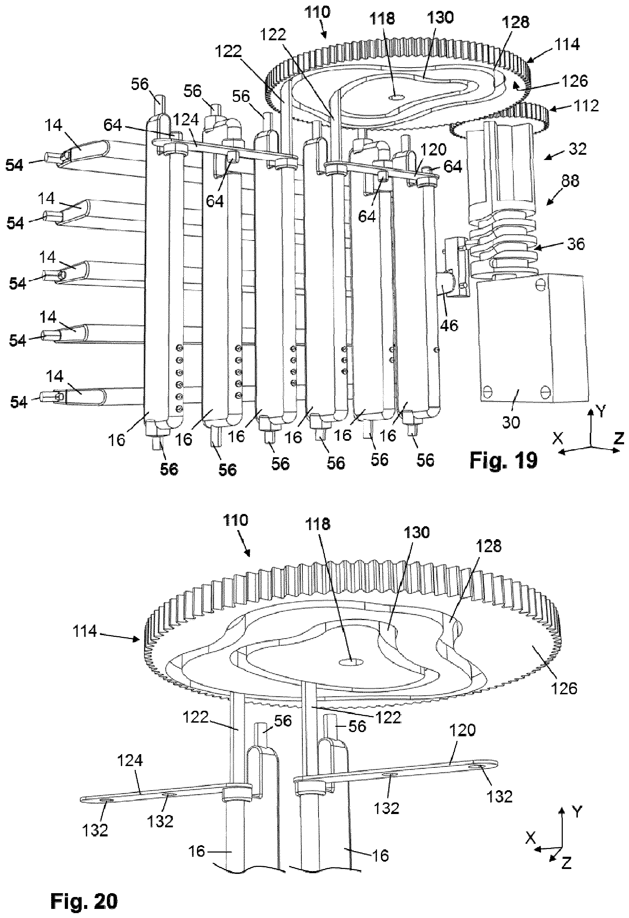

Fig. 19 zeigt einen Blick auf die Rückseite des Luftausströmers 10 der dritten Ausführungsform.

Fig. 19 zeigt die Ausbildung der Unterseite 126 des zweiten Verstellelementes 110. Dieses weist zwei Führungen 128 und 130 auf, welche im Wesentlichen als endlose Führungsbahnen bzw. Führungsnuten ausgebildet sind. In der Führung 130 ist der Zapfen 122 einer Lamelle 116 aufgenommen, der über die zweite Koppelstange 120 mit zwei weiteren Lamellen 16 gekoppelt ist. Ferner ist der Zapfen 122 einer weiteren Lamelle 16 in der Führung 128 aufgenommen, wobei diese Lamelle 16 über eine dritte Koppelstange 124 mit zwei weiteren Lamellen 16 gekoppelt ist. Erfolgt ein Verdrehen des ersten Verstellelementes 32, bewirkt die Kopplung des ersten Verstellelementes 32 mit dem zweiten Verstellelement 110 über den Zahnradabschnitt 112 und den Zahnradabschnitt 114 ein Verdrehen des zweiten Verstellelementes 110. Ferner erfolgt ein Verschwenken der Lamellen 16, da der Zapfen 122 einer ersten Gruppe von Lamellen 16 in der Führung 128 und der Zapfen 122 einer zweiten Gruppe von Lamellen 16 in einer Führung 130 geführt sind. In Abhängigkeit der Ausbildung der Führungen 128 und 130 können dann die erste Gruppe von Lamellen 16 und die zweite Gruppe von Lamellen 16 gemeinsam um einen gleichen Betrag verschwenkt werden oder die erste Gruppe von Lamellen 16 wird um einen verschiedenen Betrag zu der zweiten Gruppe von Lamellen 16 verschwenkt. Hierbei können ebenfalls Spot- und Diffusstellungen der Lamellen 16 erreicht werden. Insbesondere sind die Führungen 128 und 130 in Abhängigkeit der Führung 36 des ersten Verstellelementes 32 so ausgebildet, dass sowohl ein gemeinsames Verschwenken der ersten Gruppe von Lamellen 16 und der zweiten Gruppe von Lamellen 16 als auch ein zueinander verschiedenes Verschwenken erfolgen kann. Ferner kann ein Verschwenken der Lamellen 16 erfolgen, wenn die Lamellen 14 nicht verschwenkt werden, und umgekehrt. Ebenfalls kann auch in jeder Stellung der Lamellen 14 eine Spot- und/oder Diffusstellung der Lamellen 16 erreicht werden.

Fig. 20 zeigt eine weitere schematische Darstellung des zweiten Verstellelementes 110 und der Lamellen 116 mit den Zapfen 122 sowie deren Kopplung mit der zweiten Koppelstange 120 und der dritten Koppelstange 124. Die erste Koppelstange 120 weist drei Öffnungen 132 auf. In der ersten Öffnung ist der Zapfen 122 einer Steuerlamelle 16 aufgenommen. Die Steuerlamelle 16 ist ebenso wie die anderen Lamellen 16 um eine durch die Lagerzapfen 56 verlaufende Schwenkachse verschwenkbar. In den Öffnungen 132 sind ferner die Zapfen 64 von zwei weiteren Lamellen 16 aufgenommen. Eine zweite Steuerlamelle 16 ist über den Zapfen 122 mit der dritten Koppelstange 124 verbunden, welche zusätzlich zwei weitere Öffnungen 132 aufweist, in denen Zapfen 64 von weiteren Lamellen 16 aufgenommen sind.

Bei einem Verdrehen des zweiten Verstellelementes 110 werden die Zapfen 122 nach Maßgabe der Ausbildung der Führungen 128 und 130 nach links oder rechts bzw. nicht verschwenkt. Hierbei kann nur über das Drehen des ersten Verstellelementes 32 sowohl ein Verschwenken der an der ersten Richtung X verlaufenden Lamellen 14 als auch ein Verschwenken der an der zweiten Richtung Y verlaufenden Lamellen 16 erfolgen, wobei eine erste Gruppen von Lamellen 16 gemeinsam oder verschieden zu einer zweiten Gruppe von Lamellen 16 verschwenkt werden kann.

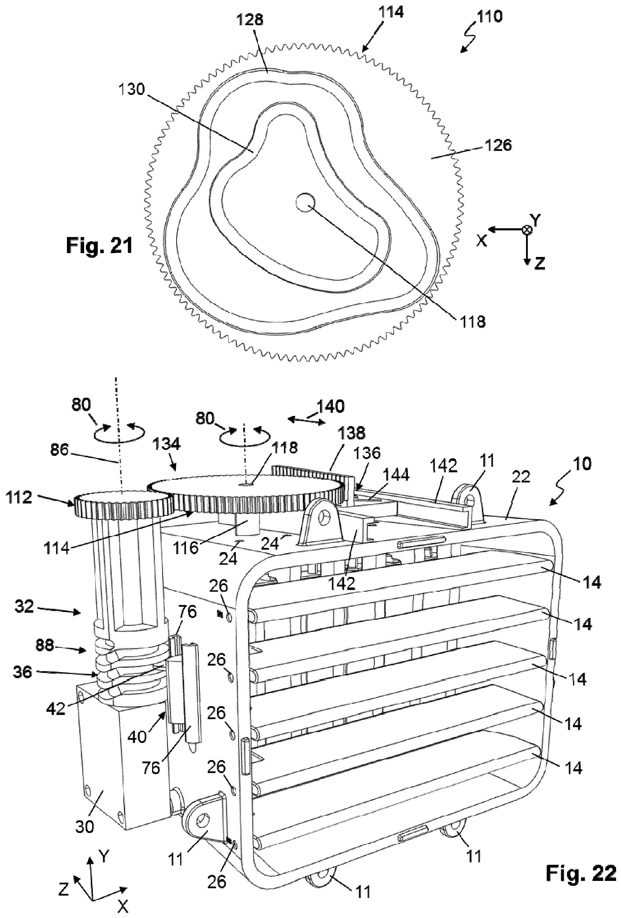

Fig. 21 zeigt einen Blick auf die Unterseite 126 des zweiten Verstellelementes 110. Wie bereits angeführt, ist die Ausbildung der Führungen 128 und 130 so zu wählen, dass sämtliche gewünschte Stellungen der Lamellen 16 erreicht werden können. Ferner können anstelle von zwei Führungen 128 und 130 auch mehrere Führungen vorgesehen sein. Die Führungen 128 und 130 sind im Wesentlichen als endlose Führungsbahn bzw. Führungsnut ausgebildet. Die Führungen 128 und 130 weisen daher keine Endstellung auf. Daher sind auch Ausführungen möglich, bei denen der Elektromotor 30 anstelle eines Verdrehens im und gegen den Uhrzeigersinn nur in einer Richtung verdreht werden kann. Hierzu wird auf die dafür notwendige Ausbildung des ersten Verstellelements 32 verwiesen, welche bereits für die zweite Ausführungsform angegeben worden ist (geschlossene Führungsbahnen) .

Die Steuerung der Lamellen 14 und 16 über den Elektromotor 30 kann wie für die erste Ausführungsform beschrieben erfolgen.

### Vierte Ausführungsform

Die Fig. 22 bis 27 zeigen eine vierte Ausführungsform eines Luftausströmers 10.

Die Ausbildung des Luftausströmers 10 der vierten Ausführungsform entspricht im Wesentlichen der Ausbildung des Luftausströmers 10 der dritten Ausführungsform. Jedoch weist der Luftausströmer 10 der vierten Ausführungsform anstelle eines zweiten Verstellelementes 110 ein zweites Verstellelement 134 auf, welches keine Führungen aufweist. Bezüglich der Ausbildung, Anordnung und dem Verstellen der in der ersten Richtung verlaufenden Lamellen 14 mittels der Führung 36 des ersten Verstellelementes 32 wird auf die Ausführungen des Luftausströmers 10 der ersten Ausführung Bezug genommen.

Das zweite Verstellelement 134 weist eine mittige Öffnung 118 auf, in der ein Lagerzapfen 116 aufgenommen ist. Der Lagerzapfen 116 ist fest mit dem Gehäuse 22 verbunden. Das zweite Verstellelement 134 ist um den Lagerzapfen 116 in Richtung des Pfeils 80 verdrehbar. Ferner sind an dem Gehäuse 22 zwei Führungsleisten 142 angeordnet, in denen ein Übertragungselement 136 in Richtung des Pfeils 140 verschieblich geführt ist. Das Übertragungselement 136 weist einen Zahnstangenabschnitt 138 auf, der in Eingriff mit dem Zahnradabschnitt 114 des zweiten Verstellelementes 134 steht. Der Zahnradabschnitt 114 des zweiten Verstellelementes 134 steht ferner in Eingriff mit dem Zahnradabschnitt 112 des ersten Verstellelementes 132. Daher wird das Übertragungselement 136 in Richtung des Pfeils 140 entlang der Führungsleisten 142 verschoben, wenn das erste Verstellelement 32 um die Längsachse 86 in Richtung des Pfeils 80 verdreht wird. Das Verdrehen des ersten Verstellelementes 32 bewirkt ein Verdrehen des zweiten Verstellelementes 134 und über die Kopplung des Zahnradabschnitts 114 mit dem Zahnstangenabschnitt 138 ein Verschieben des Übertragungselementes 136.

Das Übertragungselement 136 weist zwei Führungsbahnen 144 und 146 auf, wobei in Fig. 22 lediglich eine Führungsbahn 144 dargestellt ist. In der Führungsbahn 144 und in Führungsbahn 146 sind jeweils Zapfen 122 von zwei Lamellen 16 führbar aufgenommen. Ein Verdrehen des ersten Verstellelementes 32 bewirkt daher auch ein Verschwenken der in der zweiten Richtung Y verlaufenden Lamellen 16, wobei eine erste Lamelle 16 über eine zweite Koppelstange 120 mit weiteren Lamellen 16 gekoppelt ist und eine weitere Lamelle 16 über eine dritte Koppelstange 124 mit wieder weiteren Lamellen 16 gekoppelt ist.

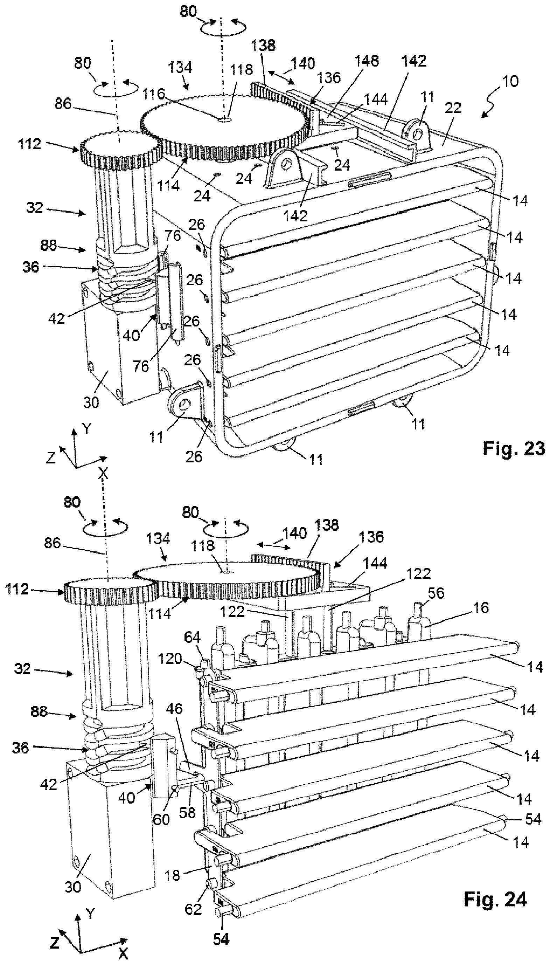

Fig. 23 zeigt im Wesentlichen die gleiche Darstellung wie Fig. 22, jedoch sind aus Fig. 23 die Anordnung der Führungsleisten 142 und des Übertragungselementes 136 besser ersichtlich. Bei der vierten Ausführungsform dient das zweite Verstellelement 134 im Wesentlichen zur Übertragung der Drehbewegung des ersten Verstellelementes 32. Ferner erfolgt eine Übersetzung der Drehgeschwindigkeit des ersten Verstellelementes 32 über das zweite Verstellelement 134, so dass das Verschieben des Übertragungselementes 136 in Richtung des Pfeils 140 entsprechend verlangsamt wird. Es kann in weiteren nicht dargestellten Aus führungen jedoch auch eine Beschleunigung in Abhängigkeit der Übersetzung erfolgen.

Im Rahmen der vorliegenden Offenbarung können jedoch auch andere Ausgestaltungen vorgesehen sein, wobei beispielsweise auf eine Übertragung mittels des zweiten Verstellelementes 134 verzichtet wird. Hierzu kann der Zahnradabschnitt 112 des ersten Verstellelementes 32 einen größeren Durchmesser aufweisen. Die Führungsbahnen 144 und 146 können auch anders ausgebildet sein, wenn bspw. keine Übersetzung mittels eines zweiten Verstellelements 134 erfolgt.

Fig. 24 zeigt eine weitere Darstellung von Komponenten des Luftausströmers 10 der vierten Ausführungsform. Aus Fig. 24 ist die Kopplung einer ersten Gruppe von Lamellen 16 über eine zweite Koppelstange 120 dargestellt. Ferner ist gezeigt, wie Zapfen 122 einer ersten Lamelle 16 und der Zapfen 122 einer zweiten Lamelle 16 nach oben in die Führungsbahn 144 und 146 ragen. Hierzu weisen die Zapfen 122 der Lamellen 116 eine größere Erstreckung in Längsrichtung auf als die Zapfen 64 der weiteren, mit den Lamellen 16 gekoppelten Lamellen 16.

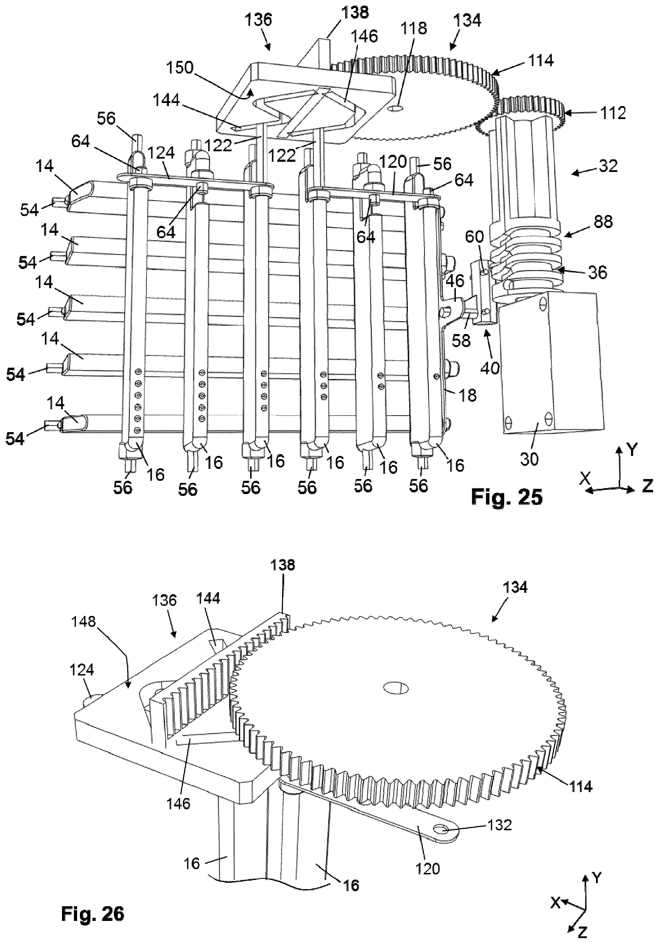

Fig. 25 zeigt einen Blick auf die Rückseite von Komponenten des Luftausströmers 10 der vierten Ausführungsform.

Der Zapfen 122 einer Lamelle ist in einer Öffnung 132 der zweiten Koppelstange 120 aufgenommen. In den weiteren Öffnungen 132 der zweiten Koppelstange 120 sind Zapfen 64 von benachbarten Lamellen 16 aufgenommen. Der Zapfen 122 einer weiteren Lamelle 16 ist in einer Öffnung 132 einer dritten Koppelstange 124 aufgenommen. Die Koppelstange 124 weist zwei weitere Öffnungen 132 auf, in denen Zapfen 64 von zwei benachbarten weiteren Lamellen 16 aufgenommen sind. Die Zapfen 122 sind ferner in den Führungsbahnen 144 und 146 aufgenommen. Erfolgt ein Verdrehen des ersten Verstellelementes 32, und damit ein Verdrehen des zweiten Verstellelementes 134, erfolgt ein Verschieben des Übertragungselementes 136 entlang den Führungsleisten 142. Die in den Führungsbahnen 144 und 146 geführten Zapfen 122 bewirken in Abhängigkeit der Position der Zapfen 122 in den Führungsbahnen 144 und 146 ein Verschwenken der Lamellen. Entsprechend können die Lamellen einer ersten Gruppe sowohl um einen gleichen Betrag verschwenkt werden wie die Lamellen 16 einer zweiten Gruppe als auch um einen dazu verschiedenen Betrag. Hierbei können Spot- und Diffusstellungen erreicht werden, so dass der austretende Luftstrom aus dem Luftausströmer 10 entweder aufgefächert oder gebündelt wird.

Fig. 26 zeigt einen Blick auf das zweite Verstellelement 134 und das Übertragungselement 136 sowie auf zwei Lamellen 16 und die zweite Koppelstange 120 und die dritte Koppelstange 124.

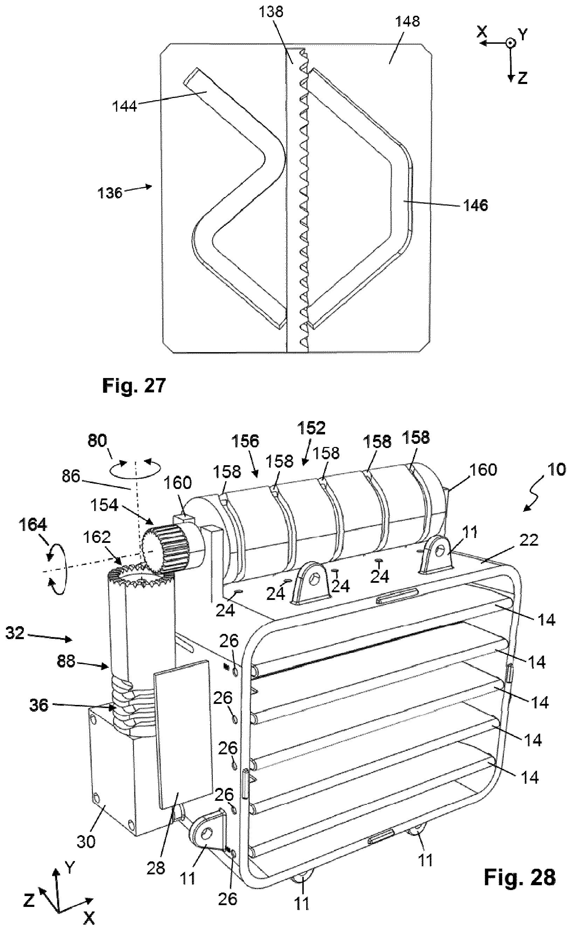

Fig. 27 zeigt den Blick auf das Übertragungselement 136. Der Zahnstangenabschnitt 138 ist auf der Oberseite 148 des Übertragungselements 136 in etwa mittig angeordnet. Fig. 27 zeigt deutlich, dass die Führungsbahn 144 verschieden zu der Führungsbahn 146 ausgebildet ist. Die Führungsbahnen und 144 und 146 weisen Bereiche auf, in denen die Lamellen 16 einer ersten Gruppe von Lamellen 16 gemeinsam um den gleichen Betrag verschwenkt werden wie die Lamellen 16 einer zweiten Gruppe von Lamellen 16. Ferner weisen die Führungsbahnen 144 und 146 Bereiche auf, in denen die Lamellen 16 einer ersten Gruppe von Lamellen 16 verschieden zu den Lamellen 16 einer zweiten Gruppe von Lamellen 16 verschwenkt werden. Die Ausbildung der Führungsbahnen 144 und 146 erfolgt nach Maßgabe der Ausbildung der Führung 36 in dem zylinderförmigen Abschnitt 88 des ersten Verstellelementes 32. Die Ausbildungen der Führungsbahnen 144 und 146 sowie der Führung 36 werden so gewählt, dass sowohl ein Verschwenken der in der ersten Richtung X verlaufenden Lamellen 14 und der in der zweiten Richtung Y verlaufenden Lamellen 16 erfolgen kann, wie dies bereits für den Luftausströmer 10 der ersten Ausführungsform angegeben ist, als auch ein Verschwenken der in der zweiten Richtung verlaufenden Lamellen 16 mit Spot- und Diffusstellungen. Vorzugsweise können die Spot-und Diffusstellungen sowie die Stellungen der Lamellen 16 bei einem gemeinsamen Verschwenken um einen gleichen Betrag in allen Stellungen der in der ersten Richtung X verlaufenden Lamellen 14 eingestellt werden.

Die Steuerung der Lamellen 14 und 16 über den Elektromotor 30 kann wie für die erste Ausführungsform beschrieben erfolgen.

### Fünfte Ausführungsform

Die Fig. 28 bis 31 zeigen eine fünfte, nicht zur Erfindung gehörende, Ausführungsform eines Luftausströmers 10.

Entsprechend der Ausgestaltung des Luftausströmers 10 in Bezug auf die Anordnung der in der ersten Richtung X verlaufenden Lamellen 14 sowie deren Verschwenken über die Führung 36 des ersten Verstellelementes 32 wird auf den Luftausströmer 10 der ersten Ausführungsform Bezug genommen.

Fig. 28 zeigt eine perspektivische Ansicht eines Luftausströmers 10 in einer fünften Ausführungsform. Der Luftausströmer 10 weist ein erstes Verstellelement 32 auf, welches im Wesentlichen vollständig aus einem zylinderförmigen Abschnitt 88 gebildet ist, an dessen oberen Ende ein Zahnradabschnitt 162 angeordnet ist. Ferner weist das Gehäuse 22 an seiner Oberseite zwei Lager 160 auf, über welche ein zweites Verstellelement 152 drehbar gelagert ist. Das zweite Verstellelement 152 weist einen Zahnradabschnitt 154 auf, der in Eingriff mit dem Zahnradabschnitt 162 des ersten Verstellelementes 32 steht. Die Längsachse 86 des ersten Verstellelementes 32 verläuft im Wesentlichen in einem rechten Winkel zu der Längsachse des zweiten Verstellelementes 152. Wird das erste Verstellelement 32 um dessen Längsachse 86 in Richtung des Pfeils 80 verdreht, so erfolgt ebenso ein Verdrehen des zweiten Verstellelementes 152 in Richtung des Pfeils 164. Das zweite Verstellelement 152 weist einen zylinderförmigen Abschnitt 156 auf, in dem fünf Führungen 158 eingearbeitet sind. Die Führungen 158 sind im Wesentlichen als umlaufende endlose Führungsnuten ausgebildet. In diese Führungen 158 greifen Zapfen 122, die an den Lamellen 16 beabstandet zu deren durch die Lagerzapfen 56 verlaufenden Drehachsen angeordnet sind.

Wird das erste Verstellelement 32 verdreht, so erfolgt ein Verschwenken der in der ersten Richtung X verlaufenden Lamellen 14, wie bereits für die erste Ausführung eines Luftausströmers 10 beschrieben, und zudem ein Verschwenken der in der zweiten Richtung Y verlaufenden Lamellen 16 entsprechend der Ausbildung der Führungen 158.

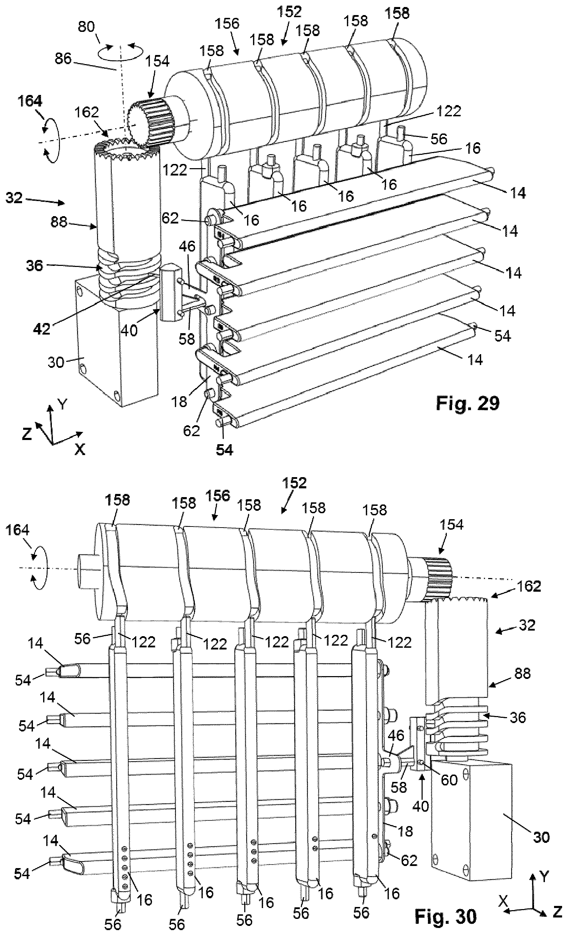

Fig. 29 zeigt eine weitere Ansicht des Luftausströmers 10 der fünften Ausführungsform ohne Gehäuse 22. Fig. 29 zeigt, dass die Zapfen 122 beabstandet zu den Lagerzapfen 56 angeordnet sind. Die Zapfen 122 ragen durch Öffnungen in dem Gehäuse 22 nach oben und sind in den Führungen 158 geführt. Erfolgt ein Verdrehen des ersten Verstellelementes 32, und damit ein Verdrehen des zweiten Verstellelementes 152 in Richtung des Pfeils 154, werden die Lamellen 16 entsprechend dem Drehwinkel und der Ausbildung der Führungen 158 verschwenkt.

Insbesondere können die Führungen 158 jeweils unterschiedlich ausgebildet sein, so dass die einzelnen Lamellen 16 vollkommen unterschiedlich zueinander verschwenkt werden können. Jedoch können die Lamellen 16 auch gemeinsam verschwenkt werden und zudem Spot- und Diffusstellungen erreicht werden. Der Grad des Verschwenkens, wobei auch Abschnitte vorgesehen sein können, die kein Verschwenken einer Lamelle 16 bewirken, ist lediglich von der Ausbildung der Führungen 158 abhängig. Entsprechend sind die Führungen 158 so ausgebildet, dass in sämtlichen Stellungen der Lamellen 14 ein Verschwenken der Lamellen 16 in allen Stellungen möglich ist und weiter Spot- und Diffusstellungen in allen Positionen bzw. Schwenkstellungen der Lamellen 14 erreicht werden können.

Fig. 30 zeigt einen Blick auf die Rückseite des Luftausströmers 10 der fünften Ausführungsform ohne Gehäuse. Obwohl die Führungen 158 in Fig. 30 im Wesentlichen identisch ausgebildet sind, können diese jedoch auch anderweitig ausgeführt sein. Die Ausbildung des zweiten Verstellelementes 152 als Walze mit umlaufenden Führungsnuten ermöglicht auf einfache Weise ein beliebiges Verstellen der Lamellen 16. Weitere Koppelelemente und Übertragungsglieder sind dafür nicht notwendig.

Fig. 31 zeigt eine perspektivische Ansicht des zweiten Verstellelementes 152. Das zweite Verstellelement 152 weist zwischen dem zylinderförmigen Abschnitt 156 und dem Zahnradabschnitt 154 einen Einschnitt 166 auf, der in einer entsprechenden Aufnahme in dem Lager 160 gelagert ist. Ferner weist das zweite Verstellelement 152 an dem unteren Ende einen Abschnitt 168 auf, der ebenso in einer Aufnahme eines Lagers 160 drehbar gelagert ist. In Bezug auf die Ausbildung der Führungen 148 wird auf die vorstehend gemachten Aussagen Bezug genommen, wobei diese nicht, wie in den Figuren dargestellt, im Wesentlichen identisch ausgebildet sein müssen. Vielmehr können die Führungen 158 verschieden zueinander ausgebildet sein, so dass sämtliche gewünschten Stellungen der Lamellen 16 erreicht werden können. Die Führungen 158 weisen zudem Abschnitte mit einer Steigung und Abschnitte ohne Steigung auf. Bei Abschnitten ohne Steigung erfolgt kein Verschwenken der Lamellen 16.

Die Steuerung der Lamellen 14 und 16 über den Elektromotor 30 kann wie für die erste Ausführungsform beschrieben erfolgen.

### Weitere Ausführungsform

Fig. 32 zeigt eine weitere, nicht zur Erfindung gehörende, Ausführungsform. Fig. 32 zeigt ein erstes Verstellelement 32 und ein zweites Verstellelement 152, welche im Wesentlichen ähnlich ausgebildet sind. Das erste Verstellelement 132 weist einen zylinderförmigen Abschnitt auf, in dem eine Vielzahl von Führungen 172 angeordnet sind. Die Führungen 172 können, anders als in Fig. 32 dargestellt, auch unterschiedlich ausgebildet sein, so dass damit gekoppelte Lamellen 14 gemeinsam und unterschiedlich zueinander verschwenkt werden können. Das erste Verstellelement 32 weist zudem einen Zahnradabschnitt 170 auf, der mit dem Zahnradabschnitt 154 des zweiten Verstellelementes 152 gekoppelt ist, so dass ein Verdrehen des ersten Verstellelementes 32 oder des zweiten Verstellelementes 152 ein Verdrehen des jeweils anderen Verstellelementes 152 oder 32 bewirkt. Die Ausbildung des zweiten Verstellelementes 152 entspricht im Wesentlichen dem fünften Ausführungsbeispiel. Hierbei können die Führungen 158 auch unterschiedlich zueinander ausgebildet sein, so dass sämtliche Stellungen von Lamellen 16 erreicht werden können, wobei diese sowohl gemeinsam um einen gleichen Betrag zueinander verschwenkt werden können als auch um einen zueinander verschiedenen Betrag. Weitere Komponenten sind in Fig. 32 nicht dargestellt, jedoch ist ersichtlich, dass durch diese Ausführung weitere Koppelelemente und Übertragungsglieder nicht notwendig sind. Hierbei können sowohl in der ersten Richtung X verlaufende Lamellen 14 als auch in der zweiten Richtung Y verlaufende Lamellen 16 beliebig zueinander verschwenkt werden, wobei lediglich zwei Elemente (erstes Verstellelement 32 und zweites Verstellelement 152) zueinander verdreht werden.

Die Führungen 158 und 172 weisen dazu Abschnitte mit einer Steigung und Abschnitte ohne Steigung auf. Für die Wirkungsweise dieser Abschnitte wird auf die anderen Ausführungsformen verwiesen.

### Bezugszeichenliste

- 10: Luftausströmer
- 11: Vorsprung
- 12: Blende
- 13: Verbindungselement
- 14: Lamelle
- 16: Lamelle
- 18: erste Koppeleinrichtung
- 20: zweite Koppeleinrichtung
- 22: Gehäuse
- 24: Öffnungen
- 26: Öffnungen
- 28: Abdeckung
- 30: Elektromotor
- 32: erstes Verstellelement
- 34: äußere Umfangsfläche
- 36: Führung
- 38: obere Fläche
- 40: Verlagerungselement
- 42: erstes Stellglied
- 44: zweites Stellglied
- 46: erster Verstellabschnitt
- 48: zweiter Verstellabschnitt
- 50: Langloch
- 52: Langloch
- 54: Lagerzapfen
- 56: Lagerzapfen
- 58: Mitnehmer
- 60: Führungsstift
- 62: Zapfen
- 64: Zapfen
- 66: Öffnung
- 68: Öffnung
- 70: Abschnitt
- 72: Abschnitt
- 74: Führungsöffnung
- 76: Führungsleiste
- 78: Antriebswelle
- 80: Pfeil
- 82: Pfeil
- 84: Pfeil
- 86: Längsachse
- 88: zylinderförmiger Abschnitt
- 90: zweites Verstellelement
- 92: Öffnung
- 94: Öffnung
- 96: Lagerzapfen
- 98: Stift
- 100: Pfeil
- 102: Führung
- 104: Unterseite
- 106: Oberseite
- 110: zweites Verstellelement
- 112: Zahnradabschnitt
- 114: Zahnradabschnitt
- 116: Lagerzapfen
- 118: Öffnung
- 120: zweite Koppelstange
- 122: Zapfen
- 124: dritte Koppelstange
- 126: Unterseite
- 128: Führung
- 130: Führung
- 132: Öffnung
- 134: zweites Verstellelement
- 136: Übertragungselement
- 138: Zahnstangenabschnitt
- 140: Pfeil
- 142: Führungsleiste
- 144: Führungsbahn
- 146: Führungsbahn
- 148: Oberseite
- 150: Unterseite
- 152: zweites Verstellelement
- 154: Zahnradabschnitt
- 156: zylinderförmiger Abschnitt
- 158: Führung
- 160: Lager
- 162: Zahnradabschnitt
- 164: Pfeil
- 166: Einschnitt
- 168: Abschnitt

- X: erste Richtung
- Y: zweite Richtung
- Z: dritte Richtung

## Patentansprüche

1. Einrichtung zum Verstellen von im Wesentlichen senkrecht zueinander angeordneten verschwenkbaren Lamellen (14, 16) eines Luftausströmers (10), aufweisend ein erstes drehbar gelagertes Verstellelement (32), wobei
- das erste Verstellelement (32) mindestens einen zylinderförmigen Abschnitt (88) aufweist,
- das erste Verstellelement (32) in dem mindestens einen zylinderförmigen Abschnitt (88) mindestens eine Führung (36) aufweist, in welcher ein erstes Verlagerungselement (40) geführt ist,
- mindestens eine in einer ersten Richtung (X) verlaufende Lamelle (14) über das Verlagerungselement (40) mit dem ersten Verstellelement (32) gekoppelt ist, und
- mindestens eine in einer zweiten Richtung (Y), senkrecht zur ersten Richtung (X) verlaufende Lamelle (16) mit dem ersten Verstellelement (32) gekoppelt ist, wobei sowohl die mindestens eine in der ersten Richtung (X) verlaufende Lamelle (14) als auch die mindestens eine in der zweiten Richtung (Y) verlaufende Lamelle (16) durch Rotation des ersten Verstellelements (32) verschwenkbar sind,
**dadurch gekennzeichnet, dass** die Einrichtung mindestens ein zweites drehbar gelagertes Verstellelement (90; 110; 134) aufweist, wobei das erste Verstellelement (32) mit dem mindestens einen zweiten Verstellelement (90; 110; 134) und das mindestens eine zweite Verstellelement (90; 110; 134) mit mindestens einer in der zweiten Richtung (Y) verlaufenden Lamelle (16) gekoppelt ist, und die Drehachse des ersten Verstellelements (32) parallel zur Drehachse des mindestens einen zweiten Verstellelements (90; 110; 134) verläuft.

2. Einrichtung nach Anspruch 1, wobei das erste Verstellelement (32) ein zweites Stellglied (44) aufweist, welches parallel zu einer Drehachse des erstes Verstellelements (32) angeordnet ist, und das zweite Stellglied (44) über das mindestens eine zweite Verstellelement (90) mit der mindestens einen in der zweiten Richtung (Y) verlaufenden Lamelle (16) gekoppelt ist.

3. Einrichtung nach Anspruch 1 oder 2, wobei das mindestens eine zweite Verstellelement (90; 110; 134)scheibenförmig ausgebildet ist.

4. Einrichtung nach Anspruch 3, wobei das erste Verstellelement (32) und das zweite Verstellelement verdrehsicher miteinander verbunden und/oder als Einheit ausgebildet sind.

5. Einrichtung nach Anspruch 1,3 oder 4, wobei das mindestens eine zweite Verstellelement (110; 134) einen umlaufenden Zahnradabschnitt (114) aufweist, der mit einem umlaufenden Zahnradabschnitt (112) des ersten Verstellelements (32) in Eingriff steht.

6. Einrichtung nach Anspruch 3, aufweisend eine Vielzahl von zweiten Verstellelementen (90), wobei die zweiten Verstellelemente (90) eine Führung (102) aufweisen und in den Führungen (102) ein Verstellglied zum Verschwenken von in der zweiten Richtung (Y) verlaufenden Lamellen (16) führbar aufgenommen ist, wobei die zweiten Verstellelemente (90) miteinander und mit dem ersten Verstellelement (32) gekoppelt sind.

7. Einrichtung nach einem der Ansprüche 3 bis 5, wobei das zweite Verstellelement (90; 110) mindestens eine Führung (102; 128; 130) aufweist und in der mindestens einen Führung (102; 128; 130) ein Verstellglied zum Verschwenken der mindestens einen in der zweiten Richtung (Y) verlaufenden Lamelle (16) führbar aufgenommen ist.

8. Einrichtung nach Anspruch 5, wobei das zweite Verstellelement (134) oder das erste Verstellelement mit einem Übertragungselement (136) gekoppelt sind und das Übertragungselement (136) mindestens eine Führungsbahn (144; 146) aufweist, in der ein Verstellglied zum Verschenken der mindestens einen in der zweiten Richtung (Y) verlaufenden Lamelle (16) führbar aufgenommen ist, wobei der umlaufende Zahnradabschnitt (114) des zweiten Verstellelements (134) oder der umlaufende Zahnradabschnitt des ersten Verstellelements mit einem Zahnstangenabschnitt (138) des Übertragungselements (136) in Eingriff stehen.

9. Einrichtung nach einem der Ansprüche 1 bis 8, wobei die mindestens eine Führung (36) als Helixkurve ausgebildet ist.

10. Einrichtung nach Anspruch 9, wobei die mindestens eine Führung (36) als abgestufte Helixkurve ausgebildet ist, wobei die abgestufte Helixkurve gegenüber der Querschnittsfläche des zylinderförmigen Abschnitts (88) des ersten Verstellelements (32) Abschnitte (70) mit einer Steigung gleich Null und Abschnitte (72) mit einer Steigung aufweist.

11. Einrichtung nach einem der Ansprüche 1 bis 10, wobei die in der ersten Richtung (X) verlaufende Lamelle (14) über eine erste Koppeleinrichtung (18) mit weiteren in der ersten Richtung (X) verlaufenden Lamellen (14) verbunden ist und/oder die in der zweiten Richtung (Y) verlaufende Lamelle (16) über eine zweite Koppeleinrichtung (20) mit weiteren in der zweiten Richtung (Y) verlaufenden Lamellen (16) verbunden ist.

12. Einrichtung nach einem der Ansprüche 1 bis 10, wobei eine erste Gruppe von in der ersten Richtung (X) verlaufenden Lamellen (14) über das erste Verlagerungselement (40) mit dem ersten Verstellelement (32) und mindestens eine zweite Gruppe von in der ersten Richtung (X) verlaufenden Lamellen über ein zweites Verlagerungselement mit dem ersten Verstellelement (32) gekoppelt sind und/oder wobei eine erste Gruppe von in der zweiten Richtung (Y) verlaufenden Lamellen (16) über eine erste Koppelvorrichtung (120) mit dem zweiten Verstellelement (110; 134)oder mit dem Übertragungselement (136) und mindestens eine zweite Gruppe von in der zweiten Richtung (Y) verlaufenden Lamellen (16) über eine zweite Koppelvorrichtung (124) mit dem zweiten Verstellelement (110; 134)oder mit dem Übertragungselement (136) gekoppelt sind.

13. Einrichtung nach einem der Ansprüche 1 bis 10 oder 11, wobei eine Vielzahl von in der ersten Richtung (X) verlaufenden Lamellen (14) über jeweils ein separates Verlagerungselement (40) in separaten Führungen in dem ersten Verstellelement (32) mit dem ersten Verstellelement (32) gekoppelt ist, und/oder eine Vielzahl von in der zweiten Richtung (Y) verlaufenden Lamellen (16) jeweils mit einem separaten zweiten Verstellelement (90) oder jeweils in einer separaten Führungsbahn (144; 146) in dem Übertragungselement (136) mit dem Übertragungselement (136) gekoppelt sind.

14. Einrichtung nach einem der Ansprüche 1 bis 13 , wobei das erste Verstellelement (32) oder das zweite Verstellelement (90; 110; 134) mit einer Antriebswelle (78) und/oder mit einem Elektromotor (30) oder einem Stellrad gekoppelt sind und/oder der Elektromotor (30) elektrisch mit Mitteln zum Einstellen der Drehzahl über Eingabevorrichtungen verbunden ist oder die Antriebswelle über mechanische Vorrichtungen steuerbar ist.

15. Einrichtung nach einem der Ansprüche 1 bis 14, wobei das erste Verstellelement (32) oder das zweite Verstellelement (90; 110; 134) mit einem dritten Verstellelement und das dritte Verstellelement mit einer Vorrichtung zum Öffnen und Schließen der Luftzufuhr zu dem Luftausströmer (10) gekoppelt sind.

16. Einrichtung nach einem der Ansprüche 1 bis 14, wobei das erste Verstellelement (32) oder das zweite Verstellelement (90; 110; 134) mit einer Vorrichtung zum Öffnen und Schließen der Luftzufuhr gekoppelt sind.

17. Einrichtung nach Anspruch 15 oder 16, wobei das erste Verstellelement (32), das zweite Verstellelement (90; 110; 134) oder das dritte Verstellelement eine Führung aufweisen, in welcher ein Verstellglied zum Öffnen und Schließen der Vorrichtung geführt ist.

## Claims

1. Device for adjusting pivotable slats (14, 16), which are arranged substantially perpendicularly to one another, of an air vent (10), comprising a first rotatably mounted adjusting element (32), wherein
- the first adjusting element (32) has at least one cylindrical section (88),
- the first adjusting element (32) has in the at least one cylindrical section (88) at least one guide (36) in which a first displacing element (40) is guided,
- at least one slat (14) extending in a first direction (X) is coupled by way of the displacing element (40) with the first adjusting element (32), and
- at least one slat (16) extending in a second direction (Y) perpendicular to the first direction (X) is coupled with the first adjusting element (32),
wherein not only the at least one slat (14) extending in the first direction (X), but also the at least one slat (16) extending in the second direction (Y) are pivotable by rotation of the first adjusting element (32),
**characterised in that** the device comprises at least one second rotatably mounted adjusting element (90; 110; 134), wherein the first adjusting element (32) is coupled with the at least one second adjusting element (90; 110; 134) and the at least one second adjusting element (90; 110; 134) is coupled with at least one slat (16) extending in the second direction (Y) and the axis of rotation of the first adjusting element (32) extends parallel to the axis of rotation of the at least one second adjusting element (90; 110; 134).

2. Device according to claim 1, wherein the first adjusting element (32) comprises a second setting element (44), which is arranged parallel to an axis of rotation of the first adjusting element (32), and the second setting element (44) is coupled by way of at least one second adjusting element (90) with the at least one slat (16) extending in the second direction (Y).

3. Device according to claim 1 or 2, wherein the at least one second adjusting element (90; 110; 134) is of disc-shaped construction.

4. Device according to claim 3, wherein the first adjusting element (32) and the second adjusting element are connected together to be secure against twisting and/or are constructed as a unit.

5. Device according to claim 1, 3 or 4, wherein the at least one second adjusting element (110; 134) has an encircling gearwheel section (114) meshing with an encircling gearwheel section (112) of the first adjusting element (32).

6. Device according to claim 3, comprising a plurality of second adjusting elements (90), wherein the second adjusting elements (90) comprise a guide (102) and an adjusting element for pivotation of slats (16) extending in the second direction (Y) is received in the guides (102) to be capable of guidance, wherein the second adjusting elements (90) are coupled with one another and with the first adjusting element (32).

7. Device according to any one of claims 3 to 5, wherein the second adjusting element (90; 110) comprises at least one guide (102; 128; 130) and an adjusting element for pivotation of the at least one slat (16) extending in the second direction (Y) is received in the at least one guide (102; 128; 130) to be capable of guidance.

8. Device according to claim 5, wherein the second adjusting element (134) or the first adjusting element is coupled with a transmission element (136) and the transmission element (136) has at least one guide track (144; 146) in which an adjusting element for pivotation of the at least one slat (16) extending in the second direction (Y) is received to be capable of guidance, wherein the encircling gearwheel section (114) of the second adjusting element (134) or the encircling gearwheel section of the first adjusting element meshes with a rack section (138) of the transmission element (136).

9. Device according to any one of claims 1 to 8, wherein the at least one guide (36) is formed as a helix curve.

10. Device according to claim 9, wherein the at least one guide (36) is formed as a stepped helix curve, wherein the stepped helix curve has by comparison with the cross-sectional area of the cylindrical section (88) of the first adjusting element (32) sections (70) with a pitch equal to zero and sections (72) with a pitch.

11. Device according to any one of claims 1 to 10, wherein the slat (14) extending in the first direction (X) is connected by way of a first coupling device (18) with further slats (14) extending in the first direction (X) and/or the slat (16) extending in the second direction (Y) is connected by way of a second coupling device (20) with further slats (16) extending in the second direction (Y).

12. Device according to any one of claims 1 to 10, wherein a first group of slats (14) extending in the first direction (X) is coupled by way of the first displacing element (40) with the first adjusting element (32) and at least one second group of slats extending in the first direction (X) is coupled by way of a second displacing element with the first adjusting element (32) and/or wherein a first group of slats (16) extending in the second direction (Y) is coupled by way of a first coupling device (120) with the second adjusting element (110; 134) or with the transmission element (136) and at least one second group of slats (16) extending in the second direction (Y) is coupled by way of a second coupling device (124) with the second adjusting element (110; 134) or with the transmission element (136).

13. Device according to any one of claims 1 to 10 or claim 11, wherein a plurality of slats (14) extending in the first direction (X) is coupled with the first adjusting element (32) by way of a respective separate displacing element (40) in separate guides in the first adjusting element (32) and/or a plurality of slats (16) extending in the second direction (Y) is respectively coupled with a separate second adjusting element (90) or - respectively in a separate guide track (144; 146) in the transmission element (136) - with the transmission element (136).

14. Device according to any one of claim 1 to 13, wherein the first adjusting element (32) or the second adjusting element (90; 110; 134) is coupled with a drive shaft (78) and/or with an electric motor (30) or a setting wheel and/or the electric motor (30) is electrically connected with means for setting the rotational speed by way of input devices or the drive shaft is controllable by way of mechanical devices.

15. Device according to any one of claims 1 to 14, wherein the first adjusting element (32) or the second adjusting element (90; 110; 134) is coupled with a third adjusting element and the third adjusting element is coupled with a device for opening and closing the air feed to the air vent (10).

16. Device according to any one of claims 1 to 14, wherein the first adjusting element (32) or the second adjusting element (90; 110; 134) is coupled with a device for opening and closing the air feed.

17. Device according to claim 15 or 16, wherein the first adjusting element (32), the second adjusting element (90; 110; 134) or the third adjusting element has a guide in which an adjusting element for opening and closing the device is guided.

## Revendications

1. Dispositif de réglage de lamelles (14, 16) pivotantes d'un aérateur (10) agencées sensiblement perpendiculairement les unes aux autres, présentant un premier élément de réglage (32) logé de manière à pouvoir tourner, dans lequel
- le premier élément de réglage (32) présente au moins une section cylindrique (88),
- le premier élément de réglage (32) présente dans l'au moins une section cylindrique (88) au moins un guidage (36) permettant de guider un premier élément de déplacement (40),
- au moins une lamelle (14) s'étendant dans une première direction (X) est accouplée par le biais de l'élément de déplacement (40) au premier élément de réglage (32), et
- au moins une lamelle (16) s'étendant dans une seconde direction (Y) perpendiculairement à la première direction (X) est accouplée au premier élément de réglage (32),
dans lequel non seulement l'au moins une lamelle (14) s'étendant dans la première direction (X) mais aussi l'au moins une lamelle (16) s'étendant dans la seconde direction (Y) peuvent pivoter par rotation du premier élément de réglage (32), **caractérisé en ce que** le dispositif présente au moins un deuxième élément de réglage (90 ; 110 ; 134) logé de manière à pouvoir tourner, le premier élément de réglage (32) étant accouplé à l'au moins un deuxième élément de réglage (90 ; 110 ; 134) et l'au moins un deuxième élément de réglage (90 ; 110 ; 134) étant accouplé à au moins une lamelle (16) s'étendant dans la seconde direction (Y), et l'axe de rotation du premier élément de réglage (32) s'étend parallèlement à l'axe de rotation de l'au moins un deuxième élément de réglage (90 ; 110 ; 134).

2. Dispositif selon la revendication 1, dans lequel le premier élément de réglage (32) présente un second organe de réglage (44) qui est agencé parallèlement à un axe de rotation du premier élément de réglage (32), et le second organe de réglage (44) est accouplé par le biais de l'au moins un deuxième élément de réglage (90) à l'au moins une lamelle (16) s'étendant dans la seconde direction (Y).

3. Dispositif selon la revendication 1 ou 2, dans lequel l'au moins un deuxième élément de réglage (90 ; 110 ; 134) est réalisé en forme de disque.

4. Dispositif selon la revendication 3, dans lequel le premier élément de réglage (32) et le deuxième élément de réglage sont raccordés l'un à l'autre sans pouvoir tourner et/ou sont réalisés en tant qu'unité.

5. Dispositif selon la revendication 1, 3 ou 4, dans lequel l'au moins un deuxième élément de réglage (110 ; 134) présente une section de roue dentée tournante (114) qui est en prise avec une section de roue dentée tournante (112) du premier élément de réglage (32).

6. Dispositif selon la revendication 3, présentant une pluralité de seconds éléments de réglage (90), dans lequel les seconds éléments de réglage (90) présentent un guidage (102) et dans les guidages (102) un organe de réglage est reçu de manière guidable pour le pivotement de lamelles (16) s'étendant dans la seconde direction (Y), les seconds éléments de réglage (90) étant accouplés les uns aux autres et au premier élément de réglage (32).

7. Dispositif selon l'une quelconque des revendications 3 à 5, dans lequel le deuxième élément de réglage (90 ; 110) présente au moins un guidage (102 ; 128 ; 130) et dans l'au moins un guidage (102 ; 128 ; 130) un organe de réglage est reçu de manière guidable pour le pivotement de l'au moins une lamelle (16) s'étendant dans la seconde direction (Y).

8. Dispositif selon la revendication 5, dans lequel le deuxième élément de réglage (134) ou le premier élément de réglage est accouplé à un élément de transmission (136) et l'élément de transmission (136) présente au moins une bande de guidage (144 ; 146) dans laquelle un organe de réglage est reçu de manière guidable pour le pivotement de l'au moins une lamelle (16) s'étendant dans la seconde direction (Y), la section de roue dentée tournante (114) du deuxième élément de réglage (134) ou la section de roue dentée tournante du premier élément de réglage étant en prise avec une section de crémaillère (138) de l'élément de transmission (136).

9. Dispositif selon l'une quelconque des revendications 1 à 8, dans lequel l'au moins un guidage (36) est réalisé en tant que courbe hélicoïdale.

10. Dispositif selon la revendication 9, dans lequel l'au moins un guidage (36) est réalisé en tant que courbe hélicoïdale étagée, dans lequel la courbe hélicoïdale étagée présente, par rapport à la section transversale de la section cylindrique (88) du premier élément de réglage (32), des sections (70) avec une pente égale à zéro et des sections (72) avec une pente.

11. Dispositif selon l'une quelconque des revendications 1 à 10, dans lequel la lamelle (14) s'étendant dans la première direction (X) est raccordée par le biais d'un premier dispositif d'accouplement (18) à d'autres lamelles (14) s'étendant dans la première direction (X) et/ou la lamelle (16) s'étendant dans la seconde direction (Y) est raccordée par le biais d'un second dispositif d'accouplement (20) à d'autres lamelles (16) s'étendant dans la seconde direction (Y).

12. Dispositif selon l'une quelconque des revendications 1 à 10, dans lequel un premier groupe de lamelles (14) s'étendant dans la première direction (X) sont accouplées par le biais du premier élément de déplacement (40) au premier élément de réglage (32) et au moins un second groupe de lamelles s'étendant dans la première direction (X) sont accouplées par le biais d'un second élément de déplacement au premier élément de réglage (32) et/ou dans lequel un premier groupe de lamelles (16) s'étendant dans la seconde direction (Y) sont accouplées par le biais d'un premier système d'accouplement (120) au deuxième élément de réglage (110 ; 134) ou à l'élément de transmission (136) et au moins un second groupe de lamelles (16) s'étendant dans la seconde direction (Y) sont accouplées par le biais d'un second système d'accouplement (124) au deuxième élément de réglage (110 ; 134) ou à l'élément de transmission (136).

13. Dispositif selon l'une quelconque des revendications 1 à 10 ou 11, dans lequel une pluralité de lamelles (14) s'étendant dans la première direction (X) est accouplée, par le biais de respectivement un élément de déplacement (40) séparé dans des guidages séparés dans le premier élément de réglage (32), au premier élément de réglage (32), et/ou une pluralité de lamelles (16) s'étendant dans la seconde direction (Y) est accouplée respectivement, avec un deuxième élément de réglage (90) séparé ou respectivement dans une bande de guidage (144 ; 146) séparée prévue dans l'élément de transmission (136), à l'élément de transmission (136).

14. Dispositif selon l'une quelconque des revendications 1 à 13, dans lequel le premier élément de réglage (32) ou le deuxième élément de réglage (90 ; 110 ; 134) est accouplé à un arbre d'entraînement (78) et/ou à un moteur électrique (30) ou à une roue de réglage et/ou le moteur électrique (30) est raccordé électriquement aux moyens de réglage de la vitesse de rotation par le biais de systèmes de saisie ou l'arbre d'entraînement peut être commandé par le biais de systèmes mécaniques.

15. Dispositif selon l'une quelconque des revendications 1 à 14, dans lequel le premier élément de réglage (32) ou le deuxième élément de réglage (90 ; 110 ; 134) est accouplé à un troisième élément de réglage et le troisième élément de réglage est accouplé à un système pour l'ouverture et la fermeture de l'amenée d'air à l'aérateur (10).

16. Dispositif selon l'une quelconque des revendications 1 à 14, dans lequel le premier élément de réglage (32) ou le deuxième élément de réglage (90 ; 110 ; 134) est accouplé à un système pour l'ouverture et la fermeture de l'amenée d'air.

17. Dispositif selon la revendication 15 ou 16, dans lequel le premier élément de réglage (32), le deuxième élément de réglage (90 ; 110 ; 134) ou le troisième élément de réglage présentent un guidage permettant de guider un organe de réglage pour l'ouverture et la fermeture du système.
